# EUROPEAN PATENT APPLICATION

(11) **EP 4 611 321 A1**
(43) Date of publication of application: **03.09.2025**
(21) Application number: 22963210.4
(22) Date of filing: 28.10.2022
(51) Int. Cl.: H04L 27/00, H04W 76/27, H04W 4/06

(54) **INFORMATION DETERMINATION METHOD AND APPARATUS, AND STORAGE MEDIUM**

(71) Applicant: Beijing Xiaomi Mobile Software Co., Ltd., Beijing 100085 (CN)
(72) Inventor: LIU, Xiaofei, Beijing 100085 (CN); WU, Yumin, Beijing 100085 (CN)
(74) Representative: Stöckeler, Ferdinand
(86) International application number: PCT/CN2022/128440
(87) International publication number: WO 2024/087229

(57) **Abstract**

Provided in the present disclosure are an information determination method and apparatus, and a storage medium. The method comprises: after the state of a terminal changes, determining target configuration information, wherein the target configuration information is used by the terminal to execute service data reception. When there are multiple sets of service configuration information, which are configured by a network device, in the terminal, the target configuration information used by the terminal to execute service data reception can still be determined. Thus, the reliability of multicast service data transmission is improved, and the availability is high.

## Description

### TECHNICAL FIELD

The disclosure relates to the field of communication technology, and in particular to a method and an apparatus for information determination, and a storage medium.

### BACKGROUND

In release 17 (R17), multicast service reception is only supported for a terminal in a connected state, that is, the terminal may receive the multicast service only when the terminal enters the connected state. In release 18 (R18), support for the multicast service reception in an inactive state is considered, that is, the terminal may still perform the multicast service reception when the terminal is in the inactive state.

When the terminal enters the inactive state, the multicast service reception may be performed based on an inactive state multicast service configuration indicated by a network device. When the terminal enters the connected state, the multicast service reception may be performed based on a connected state multicast service configuration indicated by the network device. Notably, in this case, the terminal may maintain the above two configurations, i.e., the inactive state multicast service configuration and the connected state multicast service configuration.

### SUMMARY

To solve problems in the related art, embodiments of the disclosure provide a method and an apparatus for information determination, a method and an apparatus for sending information, and a storage medium.

According to a first aspect of embodiments of the disclosure, a method for information determination, performed by a terminal, is provided. The method includes: upon a terminal state transition, determining target configuration information, in which the target configuration information is used by the terminal to perform service data reception.

Optionally, determining the target configuration information to be used includes: in response to receiving second configuration information sent by a network device, determining the target configuration information based on at least the second configuration information, in which the second configuration information is used by the terminal to perform service data reception in a second state, and the second state corresponds to a terminal state after state transition.

Optionally, determining the target configuration information to be used includes: in response to not receiving the second configuration information, determining first configuration information as the target configuration information, in which the first configuration information is used by the terminal to perform service data reception in a first state, and the first state corresponds to a terminal state before state transition.

Optionally, determining the target configuration information based on at least the second configuration information includes one of: determining the second configuration information as the target configuration information, or determining the target configuration information based on first configuration information and the second configuration information.

Optionally, the method further includes: releasing first configuration information.

Optionally, the method further includes: in response to not receiving second configuration information, determining not to perform the service data reception any more.

Optionally, the method further includes: determining whether to receive first configuration information.

Optionally, determining whether to receive the first configuration information includes: in response to the first configuration information being used for performing the service data reception, determining to receive the first configuration information; and/or in response to the first configuration information being not used for performing the service data reception, determining not to receive the first configuration information.

Optionally, determining whether to receive the first configuration information includes: in response to performing the service data reception, determining to receive the first configuration information; and/or in response to not performing the service data reception, determining not to receive the first configuration information.

Optionally, first configuration information and second configuration information correspond to the same service.

Optionally, the service includes a multicast service.

Optionally, receiving the first configuration information includes: receiving a broadcast signaling carrying the first configuration information sent by the network device, in which the first configuration information includes inactive state service configuration information.

Optionally, the method further includes receiving a first message carrying broadcast signaling reception configuration information sent by the network device; in which receiving the broadcast signaling carrying the first configuration information includes: receiving, based on the broadcast signaling reception configuration information, the broadcast signaling carrying the first configuration information sent by the network device.

Optionally, not receiving the first configuration information includes at least one of: not monitoring a first message carrying broadcast signaling reception configuration information; or not monitoring a broadcast signaling carrying the first configuration information.

Optionally, not receiving the first configuration information includes at least one of: not monitoring a paging message for notifying a broadcast signaling configuration update; or not monitoring a broadcast signaling carrying the first configuration information.

Optionally, the first message is a system information block (SIB) message or a dedicated signaling.

Optionally, the broadcast signaling is a multicast broadcast service (MBS) control channel (MCCH) message.

Optionally, the method further includes: receiving the first configuration information sent by the network device via a dedicated signaling, in which the first configuration information includes inactive state service configuration information.

Optionally, the dedicated signaling includes at least one of: a radio resource control (RRC) release message; an RRC reconfiguration message; or an RRC resume message.

Optionally, the RRC release message carries suspend configuration information.

According to a second aspect of embodiments of the disclosure, a method for information determination, performed by a network device, is provided. The method includes: determining target configuration information upon a terminal state transition, in which the target configuration information is used by the terminal to perform service data reception.

Optionally, the method further includes sending second configuration information to the terminal, in which the second configuration information is used by the terminal to perform service data reception in a second state, and the second state corresponds to a terminal state after state transition.

Optionally, determining the target configuration information upon the terminal state transition includes: in response to sending the second configuration information to the terminal, determining that the target configuration information is determined by the terminal based on at least the second configuration information.

Optionally, determining the target configuration information upon the terminal state transition includes: in response to not sending the second configuration information to the terminal, determining that first configuration information is determined by the terminal as the target configuration information, in which the first configuration information is used by the terminal to perform service data reception in a first state, and the first state corresponds to a terminal state before state transition.

Optionally, determining that the target configuration information is determined by the terminal based on at least the second configuration information includes one of: determining that the second configuration information is determined by the terminal as the target configuration information; or determining that the target configuration information is determined by the terminal based on first configuration information and the second configuration information.

Optionally, the method further includes: determining that first configuration information is released by the terminal.

Optionally, the method further includes: in response to not sending second configuration information to the terminal, determining that the service data reception is not performed by the terminal any more.

Optionally, the method further includes: determining whether the terminal is to receive first configuration information.

Optionally, determining whether the terminal is to receive the first configuration information includes: in response to the terminal using the first configuration information for performing the service data reception, determining that the terminal is to receive the first configuration information; and/or in response to the terminal not using the first configuration information for performing the service data reception, determining that the terminal is not to receive the first configuration information.

Optionally, determining whether the terminal is to receive the first configuration information includes: in response to the terminal performing the service data reception, determining that the terminal is to receive the first configuration information; and/or in response to the terminal not performing the service data reception, determining that the terminal is not to receive the first configuration information.

Optionally, first configuration information and second configuration information correspond to the same service.

Optionally, the service includes a multicast service.

Optionally, the method further includes: sending a broadcast signaling carrying the first configuration information to the terminal, in which the first configuration information includes inactive state service configuration information.

Optionally, the method further includes: sending a first message carrying broadcast signaling reception configuration information to the terminal.

Optionally, the terminal not receiving the first configuration information includes at least one of: the terminal not monitoring a first message carrying broadcast signaling reception configuration information; or the terminal not monitoring a broadcast signaling carrying the first configuration information.

Optionally, the terminal not receiving the first configuration information includes at least one of: the terminal not monitoring a paging message for notifying a broadcast signaling configuration update; or the terminal not monitoring a broadcast signaling carrying the first configuration information.

Optionally, the first message is an SIB message or a dedicated signaling.

Optionally, the broadcast signaling is an MCCH message.

Optionally, the method further includes: sending a dedicated signaling carrying the first configuration information to the terminal, in which the first configuration information includes inactive state service configuration information.

Optionally, the dedicated signaling includes at least one of: an RRC release message; an RRC reconfiguration message; or an RRC resume message.

Optionally, the RRC release message carries suspend configuration information.

According to a third aspect of embodiments of the disclosure, an apparatus for information determination, applied to a terminal, is provided. The apparatus includes: a first determining module, configured to, upon a terminal state transition, determine target configuration information, in which the target configuration information is used by the terminal to perform service data reception.

According to a fourth aspect of embodiments of the disclosure, an apparatus for information determination, applied to a network device, is provided. The apparatus includes: a second determining module, configured to determine target configuration information upon a terminal state transition, in which the target configuration information is used by the terminal to perform service data reception.

According to a fifth aspect of embodiments of the disclosure, a computer-readable storage medium is provided. The computer-readable storage medium has stored a computer program. The computer program is configured to implement any of the method for information determination at the terminal side.

According to a sixth aspect of embodiments of the disclosure, a computer-readable storage medium is provided. The computer-readable storage medium has stored a computer program. The computer program is configured to implement any of the method for information determination at the network device side.

According to a seventh aspect of embodiments of the disclosure, a device for information determination is provided, which includes: a processor; a memory storing instructions executable by the processor; in which the processor is configured to implement any of the method for information determination at the terminal side.

According to an eighth aspect of embodiments of the disclosure, a device for information determination is provided, which includes: a processor; a memory storing instructions executable by the processor; in which the processor is configured to implement any of the method for information determination at the network device side.

The technical solutions provided in embodiments of the disclosure may include the following beneficial effects.

In the embodiments of the disclosure, upon the terminal state transition, both the network device and the terminal may determine the target configuration information. In the case that there are a plurality of sets of service configuration information configured by the network device in the terminal, the target configuration information used by the terminal to perform the service data reception may still be determined. This clarifies the behavior of the terminal, which improves the reliability of multicast service data transmission, and provides high availability.

It should be understood that the above general description and the following detailed description are only exemplary and explanatory, and do not limit embodiments of the disclosure.

### BRIEF DESCRIPTION OF THE DRAWINGS

The figures herein are incorporated into the specification and constitute a part of the specification, showing that they conform to the embodiments of the disclosure, and are used together with the specification to explain the principles of the embodiments of the disclosure.
FIG. 1 is a schematic diagram illustrating a system for information determination according to an exemplary embodiment.
FIG. 2 is a flow chart illustrating a method for information determination according to an exemplary embodiment.
FIG. 3 is a flow chart illustrating another method for information determination according to an exemplary embodiment.
FIG. 4 is a flow chart illustrating another method for information determination according to an exemplary embodiment.
FIG. 5 is a flow chart illustrating another method for information determination according to an exemplary embodiment.
FIG. 6 is a flow chart illustrating another method for information determination according to an exemplary embodiment.
FIG. 7 is a flow chart illustrating another method for information determination according to an exemplary embodiment.
FIG. 8 is a flow chart illustrating another method for information determination according to an exemplary embodiment.
FIG. 9 is a block diagram illustrating an apparatus for information determination according to an exemplary embodiment.
FIG. 10 is a block diagram illustrating another apparatus for information determination according to an exemplary embodiment.
FIG. 11 is a structural block diagram illustrating a device for information determination according to an exemplary embodiment.
FIG. 12 is a structural block diagram illustrating another device for information determination according to an exemplary embodiment.

### DETAILED DESCRIPTION

Reference will now be made in detail to the exemplary embodiments, examples of which are illustrated in the accompanying figures. When the following description refers to the accompanying figures, the same numerals in different figures refer to the same or similar elements unless otherwise indicated. The implementations described in the following exemplary embodiments do not represent all implementations consistent with the disclosure. Rather, they are merely examples of devices and methods consistent with some aspects of the disclosure as recited in the appended claims.

Terms used in the disclosure are for the purpose of describing specific embodiments only, and are not intended to limit the disclosure. As used in the examples of this disclosure and the appended claims, the singular forms "a/an", "said" and "the" are also intended to include the plural forms unless the context clearly dictates otherwise. It should also be understood that the term "and/or" as used herein refers to and includes any and all possible combinations of one or more of the associated listed items.

It should be understood that although the embodiments of the disclosure may use the terms first, second, third, etc. to describe various information, the information should not be limited to these terms. These terms are only used to distinguish information of the same type from one another. For example, without departing from the scope of the embodiments of the disclosure, first information may also be called second information, and similarly, second information may also be called first information. Depending on the context, the word "if" as used herein may be interpreted as "in a case that" or "when " or "in response to a determination".

Before introducing the solutions provided in the disclosure, the terms involved in the disclosure are first explained.

In a 5th generation mobile communication technology (5G) new radio (NR) system, a multicast broadcast service (MBS) may be labeled using the following MBS service identities (IDs): temporary mobile group identity (TMGI); MBS session ID; or MBS QoS flow ID.

The MBS service includes a multicast service and a broadcast service as follows.
1. Multicast service. The terminal may receive multicast service data only after receiving a connected state multicast service configuration. The network device may send the connected state multicast service configuration to the terminal via terminal-specific (UE-specific) signaling.
2. Broadcast service. The terminal may receive broadcast service reception configuration information and broadcast service data in an idle state, an inactive state, or a connected state. The network device may send the broadcast service reception configuration information to the terminal via system information, such as a system information block (SIB), and MBS control channel information. The MBS control channel information is, for example, a multicast broadcast service control channel (MCCH).

In release 17 (R17), for the multicast service, the terminal needs to be in the connected state to receive the multicast service data. That is, the terminal cannot receive the multicast service data in the inactive state.

To improve the mechanism for the terminal in the connected state to receive the multicast service data, it is studied in release 18 (R18) to support the multicast service reception in the inactive state, allowing the terminal to continue receiving the multicast service data in the inactive state. Consequently, there may be two or more sets of multicast service configuration information in the terminal simultaneously, such as configuration information for receiving the multicast service in the connected state and configuration information for receiving the multicast service in the non-connected state. When there are two or more sets of multicast service configurations in the terminal simultaneously, further optimization is required for how the terminal performs the multicast service data reception.

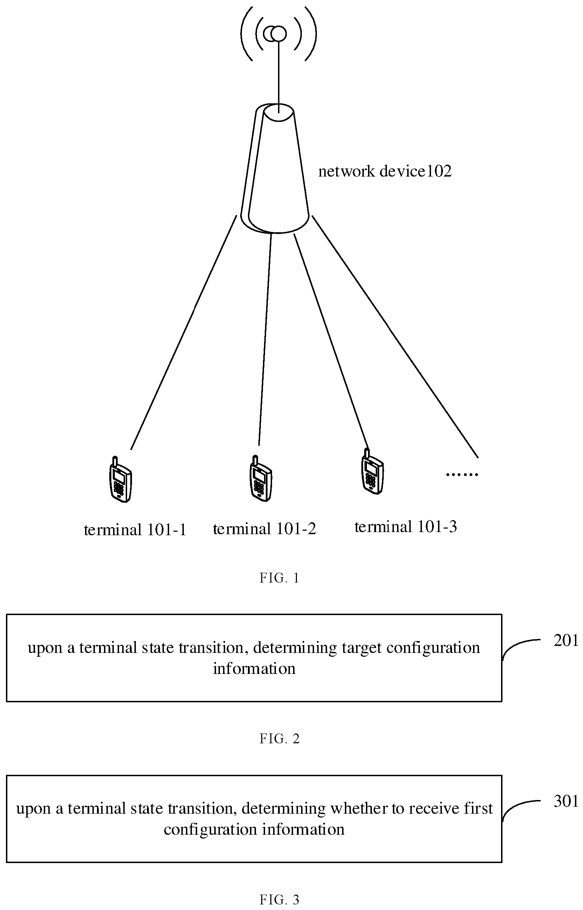

To resolve the above technical problems, the disclosure provides a method and an apparatus for information determination, and a storage medium. As shown in FIG. 1, it is a schematic diagram illustrating a network architecture applicable to embodiments of the disclosure. The network in the disclosure may be a 4G network, a 5G network, a 6G network, or a future communication network, which is not limited herein. The network architecture includes a terminal 101 and a network device 102.

The terminals 101 (including 101-1, 101-2, 101-3...... in FIG. 1) may be a smartphone, a desktop, a laptop, a tablet (iPad), etc., which is not limited herein.

The network device 102 includes, but not limited to, a base station, an access network device, etc. The base station may be a 4G base station, a 5G base station, or a future 6G base station. The access network device may be a 4G access network device, a 5G access network device, a future 6G access network device, etc., which is not limited herein. Optionally, the network device 102 may also include a core network device etc.

In some embodiments, upon a terminal state transition, the terminal 101 may determine target configuration information. The target configuration information is configuration information used by the terminal 101 to receive the multicast service. The terminal state includes, but is not limited to, a connected state (also referred to as an active state), an idle state, and an inactive state. The terminal state transition includes, but is not limited to, transition from the connected state to the idle state; transition from the connected state to the inactive state; transition from the idle state to the connected state; transition from the idle state to the inactive state; transition from the inactive state to the connected state; or transition from the inactive state to the idle state.

In other embodiments, the network device 102 determines the target configuration information, which enables the terminal to use the target configuration information to receive the multicast service upon the terminal state transition.

Thus, in the case that there are a plurality of sets of configuration information in the terminal, the terminal behavior is clarified. The network device provides the service data for the terminal based on the target configuration information, and the terminal performs the service data reception based on the target configuration information. This improves the reliability of multicast service data transmission and provides high availability.

The method for information determination provided in the disclosure is first described below from a terminal side.

Embodiments of the disclosure provide a method for information determination. Referring to FIG. 2, it is a flow chart illustrating a method for information determination according to an exemplary embodiment. The method may be performed by a terminal, and may include the following step 201.

At step 201, upon a terminal state transition, target configuration information to be used is determined.

In some embodiments of the disclosure, the terminal state includes, but is not limited to: a connected state (also referred to as an active state), an idle state, and an inactive state.

The terminal state transition includes, but is not limited to, transition from the connected state (also referred to as the active state) to the idle state; transition from the connected state to the inactive state; transition from the idle state to the connected state; transition from the idle state to the inactive state; transition from the inactive state to the connected state; or transition from the inactive state to the idle state.

The above is only an exemplary illustration, and all the cases of the terminal state transition in the practical applications shall fall within the scope of protection of the disclosure.

In some embodiments of the disclosure, the target configuration information may be used by the terminal to perform service data reception. The target configuration information includes, but is not limited to, relevant information required for the terminal to perform the service data reception, such as a time domain resource location and a frequency domain resource location when the terminal receives service data, and a beam identifier used by a network device to send the service data.

In a possible implementation, upon the terminal state transition, the terminal determines second configuration information as the target configuration information so as to perform the service data reception based on the determined target configuration information. The second configuration information is used by the terminal to perform service data reception in a second state, and the second state corresponds to a terminal state after state transition. Further, the second configuration information corresponds to a first service, and the first service may include a multicast service.

In an example, the second configuration information may be predefined, or may be configured by the network device, and may be sent to the terminal by the network device before the terminal state transition or after the terminal state transition, which is not limited herein.

For example, if the second state is a connected state, the second configuration information may include connected state configuration information. The connected state configuration information means that the terminal performs the service data reception based on the connected state configuration information when the terminal is in the connected state. In this example, the terminal may determine the connected state configuration information as the target configuration information. Further, the second configuration information corresponds to the first service. That is, the second configuration information is configured to receive data of the first service. The first service may include a multicast service, etc. It should be noted that the first service has different configuration information in different terminal states, all of which may be applied to the technical solution provided in the disclosure. The disclosure does not make specific requirements for the specific service and the service type of the first service.

In an example, the terminal receives the second configuration information sent by the network device in a non-connected state. Alternatively, the terminal receives the second configuration information sent by the network device after entering the connected state.

For another example, if the second state is an inactive state, the second configuration information may include inactive state configuration information. The inactive state configuration information means that the terminal performs the service data reception based on the inactive state configuration information when the terminal is in the inactive state. In this example, the terminal may determine the inactive state configuration information as the target configuration information. Further, the second configuration information corresponds to the first service. That is, the second configuration information is configured to receive data of the first service. The first service may include the multicast service.

For another example, if the second state is an idle state, the second configuration information may include idle state configuration information. The idle state configuration information means that the terminal performs the service data reception based on the idle state configuration information when the terminal is in the idle state. In this example, the terminal determines the idle state configuration information as the target configuration information. Further, the second configuration information corresponds to the first service. That is, the second configuration information is configured to receive data of the first service. The first service may include the multicast service.

In an example, the inactive state configuration information may be the same as or different from the idle state configuration information, which is not limited herein.

In an example, upon the terminal state transition and in the case that the terminal receives the second configuration information sent by the network device, the terminal determines the second configuration information as the target configuration information. The second configuration information is used by the terminal to perform the service data reception in the second state, and the second state corresponds to the terminal state after state transition. Further, the second configuration information corresponds to the first service, and the first service may include the multicast service.

For example, if the second state is the connected state, the terminal may receive the second configuration information sent by the network device via a dedicated signaling. The second configuration information includes connected state service configuration information. Further, the second configuration information corresponds to the first service, and the first service may include the multicast service.

The dedicated signaling may be a unicast signaling, including but not limited to at least one of: a radio resource control (RRC) release message; an RRC reconfiguration message; or an RRC resume message.

The RRC release message carries suspend configuration information. The suspend configuration information is configured to suspend corresponding service configuration information.

For example, if the second state is the inactive state, the terminal may receive the second configuration information sent by the network device via the dedicated signaling or a broadcast signaling. The second configuration information includes inactive state service configuration information. Further, the second configuration information corresponds to the first service, and the first service may include the multicast service.

The dedicated signaling may be the unicast signaling, including but not limited to at least one of: the RRC release message; the RRC reconfiguration message; or the RRC resume message. The RRC release message carries the suspend configuration information. The suspend configuration information is configured to suspend the corresponding service configuration information.

In an embodiment of the disclosure, the terminal may first receive a first message carrying broadcast signaling reception configuration information sent by the network device, and receive, based on the broadcast signaling reception configuration information, a broadcast signaling carrying the second configuration information.

The first message is an SIB message or the dedicated signaling. The SIB message may be a SIBx message, where x is a positive integer. The dedicated signaling includes, but is not limited to, at least one of: the RRC release message; the RRC reconfiguration message; or the RRC resume message. The RRC release message carries the suspend configuration information. The suspend configuration information is configured to suspend the corresponding service configuration information. The disclosure is not limited herein.

The broadcast signaling is an MCCH message.

For example, the terminal may first receive an SIB message carrying the broadcast signaling reception configuration information sent by the network device, and receive, based on the broadcast signaling reception configuration information, the broadcast signaling carrying the second configuration information sent by the network device.

For another example, the terminal may first receive a dedicated signaling carrying the broadcast signaling reception configuration information sent by the network device, and receive, based on the broadcast signaling reception configuration information, the broadcast signaling carrying the second configuration information sent by the network device. The dedicated signaling includes, but is not limited to, at least one of: the RRC release message; the RRC reconfiguration message; or the RRC resume message. The RRC release message carries the suspend configuration information. The suspend configuration information is configured to suspend the corresponding service configuration information. The disclosure is not limited herein.

For example, if the second state is the idle state, the terminal may receive the second configuration information sent by the network device via the dedicated signaling or the broadcast signaling. The second configuration information includes idle state service configuration information. Further, the second configuration information corresponds to the first service, and the first service may include the multicast service.

The dedicated signaling may be the unicast signaling, including but not limited to at least one of: the RRC release message; the RRC reconfiguration message; or the RRC resume message. In this case, the RRC release message does not carry the suspend configuration information.

In an embodiment of the disclosure, the terminal may first receive the first message carrying the broadcast signaling reception configuration information sent by the network device, and receive, based on the broadcast signaling reception configuration information, the broadcast signaling carrying the second configuration information.

The first message is the SIB message or the dedicated signaling. The SIB message may be the SIBx message, where x is a positive integer. The dedicated signaling includes, but is not limited to, at least one of: the RRC release message; the RRC reconfiguration message; or the RRC resume message. The RRC release message does not carry the suspend configuration information. The disclosure is not limited herein.

The broadcast signaling is the MCCH message. For example, if the second state is the connected state, the terminal receives the second configuration information sent by the network device via the dedicated signaling. The second configuration information may include the connected state configuration information. Further, the second configuration information corresponds to the first service, and the first service may include the multicast service. The terminal directly determines/takes the connected state configuration information as the target configuration information.

The dedicated signaling may be the unicast signaling, including but not limited to at least one of: the RRC release message; the RRC reconfiguration message; or the RRC resume message.

For example, if the second state is the inactive state, the terminal may receive the second configuration information sent by the network device via the dedicated signaling or the broadcast signaling. The second configuration information includes the inactive state configuration information. Further, the second configuration information corresponds to the first service, and the first service may include the multicast service. The terminal directly determines the inactive state configuration information as the target configuration information.

The dedicated signaling may be the unicast signaling, including but not limited to at least one of: the RRC release message; the RRC reconfiguration message; or the RRC resume message. The RRC release message carries the suspend configuration information. The suspend configuration information is used by the terminal to suspend the corresponding configuration information.

In an embodiment of the disclosure, the terminal may first receive the first message carrying the broadcast signaling reception configuration information sent by the network device, and receive, based on the broadcast signaling reception configuration information, the broadcast signaling carrying the second configuration information.

The first message is the SIB message or the dedicated signaling. The SIB message may be the SIBx message, where x is a positive integer. The dedicated signaling includes, but is not limited to, at least one of: the RRC release message; the RRC reconfiguration message; or the RRC resume message. The RRC release message carries the suspend configuration information. The suspend configuration information is configured to suspend the corresponding service configuration information. The disclosure is not limited herein.

The broadcast signaling is the MCCH message.

For example, the second configuration information may include the inactive state service configuration information. Further, the second configuration information may correspond to the first service, and the first service may include the multicast service. Accordingly, the second configuration information may include the inactive state service configuration information.

For example, if the second state is the inactive state, the terminal receives the SIBx message sent by the network device, determines the broadcast signaling reception configuration information carried in the SIBx message, and receives, based on the broadcast signaling reception configuration information, the MCCH message carrying the second configuration information. The second configuration information may include inactive state multicast service configuration information. The terminal directly determines the inactive state multicast service configuration information as the target configuration information.

For example, the terminal receives the dedicated signaling sent by the network device, determines the broadcast signaling reception configuration information carried in the dedicated signaling, and receives, based on the broadcast signaling reception configuration information, the MCCH message carrying the second configuration information. The second configuration information may include the inactive state multicast service configuration information. The terminal directly determines the inactive state multicast service configuration information as the target configuration information.

For example, if the second state is the idle state, the second configuration information may include the idle state service configuration information. The terminal may receive the idle state service configuration information sent by the network device via the broadcast signaling or the dedicated signaling. Further, the second configuration information corresponds to the first service, and the first service may include the multicast service. The terminal directly determines the idle state service configuration information as the target configuration information.

The dedicated signaling may be the unicast signaling, including but not limited to at least one of: the RRC release message; the RRC reconfiguration message; or the RRC resume message. In this case, the RRC release message does not carry the suspend configuration information.

In an embodiment of the disclosure, the terminal may first receive the first message carrying the broadcast signaling reception configuration information sent by the network device, and receive, based on the broadcast signaling reception configuration information, the broadcast signaling carrying the second configuration information.

The first message may be the SIB message or the dedicated signaling. The SIB message may be the SIBx message, where x is a positive integer. The dedicated signaling includes, but is not limited to, at least one of: the RRC release message; the RRC reconfiguration message; or the RRC resume message. The RRC release message carries the suspend configuration information. The suspend configuration information is configured to suspend the corresponding service configuration information. The disclosure is not limited herein.

The broadcast signaling is the MCCH message.

In another example, upon the terminal state transition and in the case that the terminal receives the second configuration information sent by the network device, the terminal may determine the target configuration information based on both the first configuration information and the second configuration information.

Optionally, the terminal may merge, de-duplicate, and perform a conflict processing between the second configuration information and the first configuration information, and determine the obtained service configuration information as the target configuration information. If there is a conflict in the merged target configuration information, the terminal may preferentially retain contents from the second configuration information and remove contents that conflict with the second configuration information in the first configuration information.

The first configuration information is used by the terminal to perform the service data reception in a first state. The first state corresponds to a terminal state before state transition. The second configuration information is used by the terminal to perform the service data reception in a second state. The second state corresponds to a terminal state after state transition. Further, the first configuration information and the second configuration information may correspond to the same service. The service includes a multicast service.

For example, in the case that the terminal switches from the inactive state to the connected state, the terminal may receive the second configuration information sent by the network device via the dedicated signaling. The second configuration information includes the connected state service configuration information. Further, the second configuration information corresponds to the first service, and the first service includes the multicast service.

The dedicated signaling may be the unicast signaling, including but not limited to at least one of: the RRC release message; the RRC reconfiguration message; or the RRC resume message. The RRC release message carries the suspend configuration information. The suspend configuration information is used by the terminal to suspend the corresponding service configuration information.

For example, in the case that the terminal is in the inactive state before the terminal state transition and the terminal retains the first configuration information configured by the network device, the first configuration information includes the inactive state service configuration information. Upon the terminal state transition, the terminal enters the connected state and receives the second configuration information corresponding to the connected state. Further, the first configuration information and the second configuration information may correspond to the same first service, and the first service may include the multicast service. The terminal may merge, de-duplicate, and perform a conflict processing between the second configuration information, i.e., the connected state service configuration information, and the inactive state service configuration information, determine the obtained configuration information as the target configuration information, and perform the service data reception based on the target configuration information. If there is a conflict in the merged target configuration information, the terminal may preferentially retain contents from the second configuration information and remove contents that conflict with the second configuration information in the first configuration information.

For example, in the case that the terminal switches from the connected state to the inactive state, the terminal may receive the first configuration information sent by the network device via the broadcast signaling. The first configuration information includes the connected state service configuration information. Further, the first configuration information corresponds to the first service, and the first service includes the multicast service.

For example, the terminal may receive the second configuration information sent by the network device via the broadcast signaling. The second configuration information includes the inactive state service configuration information. Further, the second configuration information corresponds to the first service, and the first service may include the multicast service.

For example, the terminal may first receive the first message carrying the broadcast signaling reception configuration information sent by the network device. Further, the terminal receives, based on the broadcast signaling reception configuration information, the broadcast signaling carrying the first configuration information or the second configuration information sent by the network device.

For example, the first message may be the SIB message or the dedicated signaling. The SIB message may be the SIBx message, where x is a positive integer. The dedicated signaling includes, but is not limited to, at least one of: the RRC release message; the RRC reconfiguration message; or the RRC resume message. The RRC release message carries the suspend configuration information. The suspend configuration information is configured to suspend the corresponding service configuration information. The disclosure is not limited herein.

For example, the broadcast signaling is the MCCH message.

For another example, in the case that the terminal is in the connected state before the terminal state transition and the terminal retains the first configuration information configured by the network device, the first configuration information includes the connected state service configuration information. Upon the terminal state transition, the terminal enters the inactive state. In the case that the terminal receives the second configuration information corresponding to the inactive state, the terminal determines the target configuration information based on both the second configuration information, i.e., the inactive state service configuration information, and the connected state service configuration information. Optionally, the terminal may merge, de-duplicate, and perform a conflict processing between the inactive state service configuration information and the connected state service configuration information, determine the obtained service configuration information as the target configuration information, and perform the service data reception based on the target configuration information. If there is a conflict in the merged target configuration information, the terminal may preferentially retain contents from the second configuration information and remove contents that conflict with the second configuration information in the first configuration information. The first configuration information and the second configuration information correspond to the same service. The service includes the multicast service. The above is only an exemplary illustration. The scheme of determining by the terminal, the target configuration information based on both the first configuration information adopted by the terminal before the terminal state transition and the second configuration information received after the terminal state transition shall fall within the scope of protection of the disclosure.

In another example, upon the terminal state transition and in the case that the terminal does not receive the second configuration information sent by the network device, the terminal may determine the first configuration information as the target configuration information. The first configuration information is used by the terminal to perform service data reception in a first state, and the first state corresponds to a terminal state before state transition. The second configuration information is used by the terminal to perform service data reception in a second state, and the second state corresponds to a terminal state after state transition. Further, the first configuration information and the second configuration information correspond to the same first service, and the first service includes the multicast service.

For example, if the terminal does not receive the second configuration information sent by the network device in a preset time period after the terminal state transition, it is determined that the second configuration information sent by the network device is not received.

For example, in the case that the terminal is in the inactive state before the terminal state transition and the terminal retains the first configuration information configured by the network device, the first configuration information includes the inactive state service configuration information. In the case that the terminal enters the connected state after the terminal state transition and the terminal does not receive the second configuration information corresponding to the connected state, the terminal determines the first configuration information, i.e., the inactive state service configuration information, as the target configuration information, and performs the service data reception based on the inactive state service configuration information. The first configuration information and the second configuration information correspond to the same first service, and the first service includes the multicast service.

For another example, in the case that the terminal is in the connected state before the terminal state transition and the terminal retains the first configuration information configured by the network device, the first configuration information includes the connected state service configuration information. In the case that the terminal enters the inactive state after the terminal state transition and the terminal does not receive the second configuration information corresponding to the inactive state, the terminal determines the first configuration information, i.e., the connected state service configuration information, as the target configuration information, and performs the service data reception based on the connected state service configuration information. The first configuration information and the second configuration information correspond to the same first service, and the first service includes the multicast service.

For another example, in the case that the terminal is in the idle state before the terminal state transition and the terminal retains the first configuration information configured by the network device, the first configuration information includes the idle state service configuration information. In the case that the terminal enters the connected state after the terminal state transition and the terminal does not receive the second configuration information corresponding to the connected state, the terminal determines the first configuration information, i.e., the idle state service configuration information, as the target configuration information, and performs the service data reception based on the idle state service configuration information. The first configuration information and the second configuration information correspond to the same first service, and the first service includes the multicast service.

The above is only an exemplary illustration. The scheme of determining, by the terminal, the first configuration information adopted by the terminal before the terminal state transition as the target configuration information in the case that the terminal does not receive the second configuration information sent by the network device after the terminal state transition shall fall within the scope of protection of the disclosure.

In another example, upon the terminal state transition, the terminal may determine the target configuration information based on both the second configuration information and the first configuration information. Optionally, the terminal may merge and de-duplicate the second configuration information and the first configuration information. If there are conflicted contents between the second configuration information and the first configuration information, the contents in one of the first or second configuration information are retained, and the contents in the other of the first or second configuration information are deleted to obtain the target configuration information, so as to perform the service data reception in the second state. The first configuration information and the second configuration information correspond to the same service. The service includes the multicast service.

The specific method of determining the target configuration information is illustrated in the above embodiments and will not be repeated herein.

Alternatively, upon the terminal state transition, the terminal may determine the second configuration information as the target configuration information and perform the service data reception in the second state. At the same time, the terminal may not release the first configuration information. In this case, not releasing the first configuration information includes, but is not limited to, at least one of: not deleting the first configuration information, using the first configuration information; or retaining the first configuration information. Further, the first configuration information and the second configuration information may correspond to the same first service, and the first service includes the multicast service.

For example, in the case that the terminal switches from the inactive state to the connected state, in which the second state is the connected state, the terminal may merge, de-duplicate, and perform a conflict processing between the first configuration information (inactive state service configuration information) and the second configuration information (connected state service configuration information), determine the obtained configuration information as the target configuration information, and perform the service data reception in the connected state based on the target configuration information. If there is a conflict in the merged target configuration information, the terminal may preferentially retain contents from the second configuration information and remove contents that conflict with the second configuration information in the first configuration information.

For another example, in the case that the terminal switches from the inactive state to the connected state, in which the second state is the connected state, the terminal determines the second configuration information (connected state service configuration information) as the target configuration information, and performs the service data reception in the connected state based on the target configuration information. At the same time, the terminal does not release the first configuration information, i.e., the inactive state service configuration information. In this case, not releasing the inactive state service configuration information includes, but is not limited to, at least one of: not deleting the inactive state service configuration information; performing the service data reception in the inactive state using the inactive state service configuration information; or retaining the inactive state service configuration information.

In another possible implementation, the terminal determines the target configuration information. Further, the first configuration information may be released. The first configuration information is used by the terminal to perform the service data reception in the first state, and the first state corresponds to the terminal state before state transition. Further, the first configuration information may correspond to the first service, and the first service includes the multicast service.

In an example, releasing the first configuration information includes, but is not limited to, at least one of: deleting the first configuration information; not using the first configuration information; or not retaining the first configuration information.

In another possible implementation, the terminal determines the target configuration information. Further, the first configuration information may not be released. The first configuration information is used by the terminal to perform the service data reception in the first state, and the first state corresponds to the terminal state before state transition. Further, the first configuration information may correspond to the first service, and the first service includes the multicast service.

In an example, not releasing the first configuration information includes, but is not limited to, at least one of: not deleting the first configuration information; using the first configuration information; or retaining the first configuration information.

In another possible implementation, the first configuration information may be released whether the terminal receives the second configuration information sent by the network device after the terminal state transition. In this case, releasing the first configuration information includes, but is not limited to, at least one of: deleting the first configuration information; not using the first configuration information; or not retaining the first configuration information.

In an example, upon the terminal state transition, the first configuration information may be released. In this case, releasing the first configuration information includes, but is not limited to, at least one of: deleting the first configuration information; not using the first configuration information; or not retaining the first configuration information. If the terminal receives the second configuration information sent by the network device, the second configuration information is taken as the target configuration information, and the service data reception is performed based on the second configuration information.

For example, in the case that the terminal state is switched from the inactive state to the connected state, the inactive state service configuration information is released. In this case, releasing the first configuration information includes, but is not limited to, at least one of: deleting the first configuration information; not using the first configuration information; or not retaining the first configuration information. If the terminal receives the connected state service configuration information sent by the network device, the connected state service configuration information is taken as the target configuration information, and the service data reception is performed based on the connected state service configuration information.

For another example, in the case that the terminal state is switched from the connected state to the inactive state, the connected state service configuration information is released. In this case, releasing the first configuration information includes, but is not limited to, at least one of: deleting the first configuration information; not using the first configuration information; or not retaining the first configuration information. If the terminal receives the inactive state service configuration information sent by the network device, the inactive state service configuration information is taken as the target configuration information, and the service data reception is performed based on the inactive state service configuration information.

In another example, upon the terminal state transition, the first configuration information is released. In this case, releasing the first configuration information includes, but is not limited to, at least one of: deleting the first configuration information; not using the first configuration information; or not retaining the first configuration information. If the terminal does not receive the second configuration information sent by the network device, the terminal determines that the network device does not support service transmission or no longer continue the service transmission. In this case, the terminal determines not to perform the service data reception any more.

For example, if the terminal does not receive the second configuration information sent by the network device in the preset time period after the terminal state transition, it is determined that the second configuration information sent by the network device is not received.

For example, in the case that the terminal state is switched from the inactive state to the connected state, the inactive state service configuration information is released. In this case, releasing the first configuration information includes, but is not limited to, at least one of: deleting the first configuration information; not using the first configuration information; or not retaining the first configuration information. If the terminal does not receive the connected state service configuration information sent by the network device, the terminal determines that the network device does not support the service transmission or no longer continue the service transmission. In this case, the terminal determines not to perform the service data reception any more.

For example, if the terminal does not receive the second configuration information sent by the network device in the preset time period after the terminal state transition, it is determined that the second configuration information sent by the network device is not received.

For another example, in the case that the terminal state is switched from the connected state to the inactive state, the connected state service configuration information is released. In this case, releasing the first configuration information includes, but is not limited to, at least one of: deleting the first configuration information; not using the first configuration information; or not retaining the first configuration information. If the terminal does not receive the inactive state service configuration information sent by the network device, the terminal determines that the network device does not support service transmission or no longer continue the service transmission . In this case, the terminal determines not to perform the service data reception any more.

The network device in the above embodiments may include, but is not limited to, a base station, an access network device, etc. The base station may be a 4G base station, a 5G base station, or a future 6G base station. The access network device may be a 4G access network device, a 5G access network device, a future 6G access network device, etc. Optionally, the network device 102 may also include a core network device, etc.

In the above embodiments, upon the terminal state transition, there may be a plurality of sets of service configuration information in the terminal simultaneously. The terminal may determine the target configuration information to be used, thus clarifying the behavior of the terminal. This includes, but is not limited to, how the terminal determines the specific configuration information to be retained or used. This improves the reliability of multicast service data transmission and provides high availability.

In some optional embodiments, referring to FIG. 3, it is a flow chart illustrating a method for information determination according to an exemplary embodiment. The method may be performed by a terminal, and may include the following step 301.

At step 301, upon a terminal state transition, whether to receive first configuration information is determined.

In some embodiments of the disclosure, the terminal state includes, but is not limited to: a connected state (also referred to as an active state), an idle state, and an inactive state.

In an embodiment of the disclosure, the terminal state transition includes, but is not limited to, transition from the connected state (also referred to as the active state) to the idle state; transition from the connected state to the inactive state; transition from the idle state to the connected state; transition from the idle state to the inactive state; transition from the inactive state to the connected state; or transition from the inactive state to the idle state.

The above is only an exemplary illustration, and all the cases of the terminal state transition in the practical applications shall fall within the scope of protection of the disclosure.

The first configuration information is used by the terminal to perform the service data reception in a first state. The first state corresponds to a terminal state before state transition. The first configuration information includes, but is not limited to, relevant information required for the terminal to perform the service data reception in the first state, such as a time domain resource location and a frequency domain resource location when the terminal receives service data, and a beam identifier used by a network device to send the service data.

For example, if the terminal state before state transition is in the first state and the first state is the connected state, the first configuration information may include connected state service configuration information.

For example, if the terminal state before state transition is in the first state and the first state is the inactive state, the first configuration information may include inactive state service configuration information.

For example, if the terminal state before state transition is in the first state before state transition and the first state is the idle state, the first configuration information may include service configuration information corresponding to the idle state.

In a possible implementation, upon the terminal state transition, whether to receive the first configuration information is determined based on whether the terminal performs the service data reception using the first configuration information.

In an example, upon the terminal state transition and in the case that the terminal performs the service data reception using the first configuration information, it is determined that the first configuration information is received.

For example, in the case that the terminal state is switched from the inactive state to the connected state, the first configuration information includes the inactive state service configuration information, and if the terminal performs the service data reception using the inactive state service configuration information after the terminal enters the connected state, it may be determined that the inactive state service configuration information is received.

For another example, in the case that the terminal state is switched from the connected state to the inactive state, the first configuration information includes the connected state service configuration information, and if the terminal performs the service data reception using the connected state service configuration information after the terminal enters the inactive state, it may be determined that the connected state service configuration information is received.

In another example, upon the terminal state transition and in the case that the terminal does not perform the service data reception using the first configuration information, e.g., performs the service data reception using the second configuration information or does not perform the service data reception, it is determined that the first configuration information is not received.

For example, in the case that the terminal state is switched from the inactive state to the connected state, the first configuration information includes inactive state configuration information, and if the terminal performs the service data reception using connected state configuration information after the terminal enters the connected state, it may be determined that the inactive state configuration information is not received.

For another example, in the case that the terminal state is switched from the inactive state to the connected state, the first configuration information includes the inactive state configuration information, and if the terminal does not perform the service data reception after the terminal enters the connected state, it may be determined that the inactive state configuration information is not received.

In a possible implementation, upon the terminal state transition, whether to receive the first configuration information is determined based on whether the terminal performs the service data reception.

In an example, upon the terminal state transition and in the case that the terminal performs the service data reception, it is determined that the first configuration information is received.

For example, in the case that the terminal state is switched from the inactive state to the connected state, the first configuration information includes the inactive state configuration information, and if the terminal performs the service data reception after the terminal enters the connected state, in particular, the terminal performs the service data reception after the terminal enters the connected state using the first configuration information (inactivated state configuration information), the second configuration information (connected state configuration information), or the target configuration information (obtained based on both the first configuration information and the second configuration information), the terminal may determine to receive the inactivated state configuration information.

In an example, upon the terminal state transition and in the case that the terminal does not perform the service data reception, it is determined that the first configuration information is not received.

For example, in the case that the terminal state is switched from the inactive state to the connected state, the first configuration information includes the inactive state configuration information, and if the terminal does not perform the service data reception after the terminal enters the connected state, it may be determined that the inactive state service configuration information is not received.

In a possible implementation, the first configuration information and the second configuration information may correspond to the same first service, and the first service may include but is not limited to a multicast service.

In an example, in the case that the terminal is switched from the inactive state to the connected state, the first configuration information may include the inactive state configuration information, and the second configuration information may include the connected state configuration information. The first configuration information and the second configuration information may correspond to the same first service, and the first service may include but is not limited to the multicast service.

In another example, in the case that the terminal is switched from the inactive state to the idle state, the first configuration information may include the inactive state configuration information, and the second configuration information may include idle state configuration information. The first configuration information and the second configuration information may correspond to the same first service, and the first service may include but is not limited to the multicast service.

In another example, in the case that the terminal is switched from the connected state to the inactive state, the first configuration information may include the connected state configuration information, and the second configuration information may include the inactive state configuration information. The first configuration information and the second configuration information may correspond to the same first service, and the first service may include but is not limited to the multicast service.

In another example, in the case that the terminal is switched from the connected state to the idle state, the first configuration information may include the connected state configuration information, and the second configuration information may include the idle state configuration information. The first configuration information and the second configuration information may correspond to the same first service, and the first service may include but is not limited to the multicast service.

In another example, in the case that the terminal is switched from the idle state to the connected state, the first configuration information may include the idle state configuration information, and the second configuration information may include the connected state configuration information. The first configuration information and the second configuration information may correspond to the same first service, and the first service may include but is not limited to the multicast service.

In another example, in the case that the terminal is switched from the idle state to the inactive state, the first configuration information may include the idle state configuration information, and the second configuration information may include the inactive state configuration information. The first configuration information and the second configuration information may correspond to the same first service, and the first service may include but is not limited to the multicast service.

In a possible implementation, in the case of determining to receive the first configuration information, the terminal may receive a broadcast signaling (not shown in FIG. 3) carrying the first configuration information sent by the network device. Further, the first configuration information corresponds to the first service, and the first service may include the multicast service.

In an example, the first configuration information includes the inactive state configuration information. Further, the first configuration information corresponds to the first service, and the first service may include the multicast service.

In an example, the terminal may first receive a first message carrying broadcast signaling reception configuration information sent by the network device. Further, the terminal receives, based on the broadcast signaling reception configuration information, the broadcast signaling carrying the first configuration information sent by the network device.

For example, the first message may be an SIB message or a dedicated signaling. The SIB message may be a SIBx message, where x is a positive integer. The dedicated signaling includes, but is not limited to, at least one of: an RRC release message; an RRC reconfiguration message; or an RRC resume message. The RRC release message carries suspend configuration information. The suspend configuration information is configured to suspend corresponding service configuration information. The disclosure is not limited herein.

For example, the broadcast signaling is an MCCH message.

In an embodiment of the disclosure, the terminal may receive the inactive state configuration information sent by the network device via the MCCH message. The terminal receives the MCCH message based on the broadcast signaling reception configuration information carried in the SIBx message sent by the network device.

Alternatively, the terminal may receive the inactive state configuration information sent by the network device via the MCCH message. The terminal receives the MCCH message based on the broadcast signaling reception configuration information carried in the dedicated signaling sent by the network device. The dedicated signaling includes, but is not limited to, at least one of: the RRC release message; the RRC reconfiguration message; or the RRC resume message. The RRC release message carries the suspend configuration information. The suspend configuration information is configured to suspend the corresponding configuration information. The disclosure is not limited herein.

The above is only an exemplary illustration. The scheme of determining to receive the first configuration information by the terminal and the scheme of receiving the first configuration information via the corresponding message or the corresponding signaling shall fall within the scope of protection of the disclosure.

In another possible implementation, in the case that the terminal determines to receive the first configuration information and the terminal is in the connected state, the terminal may receive the dedicated signaling (not shown in FIG. 3) carrying the first configuration information sent by the network device. Further, the first configuration information corresponds to the first service, and the first service may include the multicast service.

The dedicated signaling may be a unicast signaling, including but not limited to at least one of: the RRC release message; the RRC reconfiguration message; or the RRC resume message.

The RRC release message carries the suspend configuration information. The suspend configuration information is configured to suspend the corresponding service configuration information.

In a possible implementation, in the case that the first message is the SIB message, the terminal receives the broadcast signaling reception configuration information sent by the network device via the SIB message, and thus receives the broadcast signaling carrying the first configuration information sent by the network device based on the broadcast signaling reception configuration information. If the terminal determines not to receive the first configuration information, the terminal may not monitor the first message, i.e., the SIB message, carrying the broadcast signaling reception configuration information, and/or may not monitor the broadcast signaling (not shown in FIG. 3) carrying the first configuration information.

For example, the SIB message may be the SIBx message, where x is a positive integer. The disclosure is not limited herein.

For example, the broadcast signaling is the MCCH message.

In an embodiment of the disclosure, the terminal may not monitor the SIBx message carrying the broadcast signaling reception configuration information and/or may not monitor the MCCH message carrying the first configuration information.

In another possible implementation, in the case that the first message is the dedicated signaling, the terminal receives the broadcast signaling reception configuration information sent by the network device via the dedicated signaling, and thus receives the broadcast signaling carrying the first configuration information sent by the network device based on the broadcast signaling reception configuration information. If the terminal determines not to receive the first configuration information, the terminal may not monitor a paging message for notifying a broadcast signaling configuration update, and/or may not monitor the broadcast signaling (not shown in FIG. 3) carrying the first configuration information. The dedicated signaling includes, but is not limited to, at least one of: the RRC release message; the RRC reconfiguration message; or the RRC resume message. The RRC release message carries the suspend configuration information. The suspend configuration information is configured to suspend the corresponding service configuration information.

For example, the broadcast signaling is the MCCH message.

In an embodiment of the disclosure, the terminal may not monitor the paging message for notifying the broadcast signaling configuration update and/or may not monitor the MCCH message carrying the first configuration information.

In another possible implementation, in the case that the terminal determines not to receive the first configuration information, the terminal may not monitor the dedicated signaling (not shown in FIG. 3) carrying the first configuration information.

The dedicated signaling may be the unicast signaling, including but not limited to at least one of: the RRC release message; the RRC reconfiguration message; or the RRC resume message. The RRC release message carries the suspend configuration information. The suspend configuration information is configured to suspend the corresponding configuration information.

The above is only an exemplary illustration. The scheme of determining not to receive the first configuration information by the terminal and thus stopping execution of a corresponding terminal action shall fall within the scope of protection of the disclosure.

In the above embodiments, upon the terminal state transition, the terminal may determine whether to receive the first configuration information. In the case of determining to receive the first configuration information, the first configuration information sent by the network device may be received using the above-described scheme. In the case of determining not to receive the first configuration information, the corresponding message may not be monitored any more. In the case that there are a plurality of sets of service configuration information configured by the network device in the terminal, the behavior of the terminal is clarified. This includes, but is not limited to, whether the terminal is required to monitor the corresponding message, providing high availability.

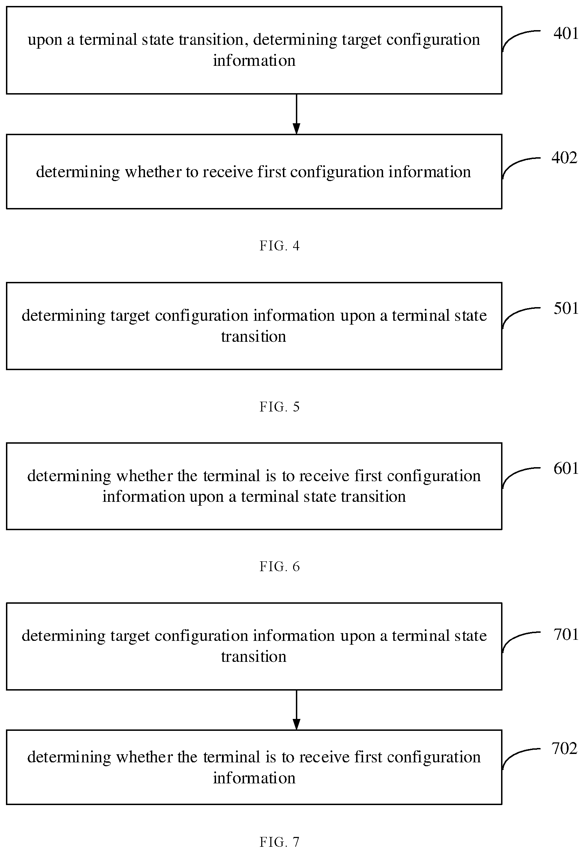

In some optional embodiments, referring to FIG. 4, it is a flow chart illustrating a method for information determination according to an exemplary embodiment. The method may be performed by a terminal, and may include the following steps 401 to 402.

At step 401, upon a terminal state transition, target configuration information to be used is determined.

The implementation of step 401 is similar to step 201 described above and will not be repeated herein.

At step 402, whether to receive first configuration information is determined.

The implementation of step 402 is similar to step 301 described above and will not be repeated herein.

In the above embodiments, upon the terminal state transition, the terminal may determine the target configuration information to be used, and determine whether to receive the first configuration information. In the case that there are a plurality of sets of configuration information configured by the network device in the terminal, the behavior of the terminal is clarified. This improves the reliability of multicast service data transmission and provides high availability.

In some optional embodiments, in the case that the terminal switches from an inactive state to a connected state and the terminal determines to receive the first configuration information, the terminal may receive a broadcast signaling carrying the first configuration information sent by a network device. Further, the first configuration information corresponds to a first service, and the first service may include the multicast service.

In an embodiment of the disclosure, the terminal may first receive a first message carrying broadcast signaling reception configuration information sent by the network device. Further, the terminal receives, based on the broadcast signaling reception configuration information, the broadcast signaling carrying the first configuration information sent by the network device.

For example, the first message may be an SIB message or a dedicated signaling. The SIB message may be a SIBx message, where x is a positive integer. The dedicated signaling includes, but is not limited to, at least one of: an RRC release message; an RRC reconfiguration message; or an RRC resume message. The RRC release message does not carry suspend configuration information. The disclosure is not limited herein.

In a possible implementation, the broadcast signaling is an MCCH message.

For example, the terminal may first receive the SIBx message carrying the broadcast signaling reception configuration information sent by the network device. Further, the terminal receives, based on the broadcast signaling reception configuration information carried in the SIBx message, the MCCH message carrying the first configuration information sent by the network device.

For example, the terminal may first receive a dedicated signaling carrying the broadcast signaling reception configuration information sent by the network device. Further, the terminal receives, based on the broadcast signaling reception configuration information carried in the dedicated signaling, the MCCH message carrying the first configuration information sent by the network device.

The dedicated signaling includes, but is not limited to, at least one of: the RRC release message; the RRC reconfiguration message; or the RRC resume message. The RRC release message does not carry the suspend configuration information. The disclosure is not limited herein.

In a possible implementation, the first configuration information includes inactive state configuration information. The terminal receives the inactive state configuration information sent by the network device via the MCCH message. The terminal receives the MCCH message based on the broadcast signaling reception configuration information carried in the SIBx message or in the dedicated signaling sent by the network device.

In another example, in the case that the terminal switches from an inactive state to a connected state and the terminal determines to receive the first configuration information, in which the terminal is in the connected state, the terminal may receive the dedicated signaling carrying the first configuration information sent by the network device. Further, the first configuration information corresponds to the first service, and the first service may include the multicast service.

The dedicated signaling may be the unicast signaling, including but not limited to at least one of: the RRC release message; the RRC reconfiguration message; or the RRC resume message.

The RRC release message carries the suspend configuration information. The suspend configuration information is configured to suspend the corresponding service configuration information.

In some optional embodiments, in the case that the terminal switches from the inactive state to the connected state, the terminal may receive the second configuration information sent by the network device via the dedicated signaling. The second configuration information includes connected state configuration information. Further, the second configuration information may correspond to the first service, and the first service may include but is not limited to the multicast service.

In a possible implementation, the dedicated signaling may be the unicast signaling, including at least one of: the RRC release message; the RRC reconfiguration message; or the RRC resume message.

In an example, the RRC release message carries the suspend configuration information. The suspend configuration information is configured to suspend the corresponding service configuration information.

In a possible implementation, the second configuration information includes the connected state configuration information. The terminal receives the connected state configuration information sent by the network device via at least one of the RRC release message; the RRC reconfiguration message; or the RRC resume message. The RRC release message carries the suspend configuration information. The suspend configuration information is configured to suspend the corresponding configuration information. Further, the second configuration information corresponds to the first service, and the first service may include the multicast service.

In the above embodiments, in the case that there are a plurality of sets of configuration information configured by the network device in the terminal, the behavior of the terminal is clarified. This improves the reliability of multicast service data transmission and provides high availability.

The method for information determination provided in the disclosure is described below from a network device side.

Embodiments of the disclosure provide a method for information determination. Referring to FIG. 5, it is a flow chart illustrating a method for information determination according to an exemplary embodiment. The method may be performed by a network device. The network device may include, but is not limited to, a base station, an access network device, etc. The base station may be a 4G base station, a 5G base station, or a future 6G base station. The access network device may be a 4G access network device, a 5G access network device, a future 6G access network device, etc. The method may include the following step 501.

At step 501, upon a terminal state transition, target configuration information is determined.

In some embodiments of the disclosure, the terminal state includes, but is not limited to: a connected state (also referred to as an active state), an idle state, and an inactive state.

The terminal state transition includes, but is not limited to, transition from the connected state (also referred to as the active state) to the idle state; transition from the connected state to the inactive state; transition from the idle state to the connected state; transition from the idle state to the inactive state; transition from the inactive state to the connected state; or transition from the inactive state to the idle state.

The above is only an exemplary illustration, and all the cases of the terminal state transition in the practical applications shall fall within the scope of protection of the disclosure.

In some embodiments of the disclosure, the target configuration information may be used by the terminal to perform service data reception. The target configuration information includes, but is not limited to, relevant information required for the terminal to perform the service data reception, such as a time domain resource location and a frequency domain resource location when the terminal receives the service data, and a beam identifier used by a network device to send service data when the terminal receives the service data.

In a possible implementation, upon the terminal state transition, the network device may determine that the second configuration information is taken in priority by the terminal as the target configuration information. The network device may then send the service data to the terminal based on the determined target configuration information, and the terminal performs the service data reception based on the target configuration information. The second configuration information is used by the terminal to perform service data reception in a second state, and the second state corresponds to a terminal state after state transition. Further, the second configuration information corresponds to a first service, and the first service may include a multicast service.

In an example, the second configuration information may be predefined, or may be configured by the network device, and may be sent to the terminal by the network device before the terminal state transition or after the terminal state transition, which is not limited herein.

For example, if the second state is a connected state, the second configuration information may include connected state configuration information. The connected state configuration information means that the terminal performs the service data reception based on the connected state configuration information when the terminal is in the connected state. In this example, the network device may determine that the connected state configuration information is taken in priority by the terminal as the target configuration information. Further, the second configuration information corresponds to the first service. The first service may include a multicast service. That is, the second configuration information is configured to receive data of the first service. The first service may include the multicast service, etc. It should be noted that the first service has different configuration information in different terminal states, all of which may be applied to the technical solution provided in the disclosure. The disclosure does not make specific requirements for the specific service and the service type of the first service.

In an example, the terminal receives the second configuration information sent by the network device in a non-connected state. Alternatively, the terminal receives the second configuration information sent by the network device after entering the connected state.

For example, if the second state is an inactive state, the second configuration information may include inactive state configuration information. The inactive state configuration information means that the terminal performs the service data reception based on the inactive state configuration information when the terminal is in the inactive state. In this example, the network device may determine that the inactive state configuration information is taken in priority by the terminal as the target configuration information. Further, the second configuration information corresponds to the first service. That is, the second configuration information is configured to receive data of the first service. The first service may include the multicast service.

For another example, if the second state is an idle state, the second configuration information may include idle state configuration information. The idle state configuration information means that the terminal performs the service data reception based on the idle state configuration information when the terminal is in the idle state. In this example, the network device determines that the idle state configuration information is taken in priority by the terminal as the target configuration information. Further, the second configuration information corresponds to the first service. That is, the second configuration information is configured to receive data of the first service. The first service may include the multicast service.

In an example, the inactive state configuration information may be the same as or different from the idle state configuration information, which is not limited herein.

In an example, upon the terminal state transition, the network device may send the second configuration information to the terminal. Accordingly, after the network device sends the second configuration information to the terminal, the network device determines that the second configuration information is taken directly by the terminal as the target configuration information. The second configuration information is used by the terminal to perform the service data reception in the second state, and the second state corresponds to the terminal state after state transition. Further, the second configuration information corresponds to the first service, and the first service may include the multicast service.

For example, if the second state is the connected state, the network device may send the second configuration information to the terminal via a dedicated signaling. The second configuration information includes connected state configuration information. Further, the second configuration information corresponds to the first service, and the first service may include the multicast service.

The dedicated signaling may be a unicast signaling, including but not limited to at least one of: an RRC release message; an RRC reconfiguration message; or an RRC resume message.

The RRC release message carries suspend configuration information. The suspend configuration information is configured to suspend corresponding configuration information.

For example, if the second state is the inactive state, the terminal may receive the second configuration information sent by the network device via the dedicated signaling or a broadcast signaling. The second configuration information includes inactive state configuration information. Further, the second configuration information corresponds to the first service, and the first service may include the multicast service.

The dedicated signaling may be the unicast signaling, including but not limited to at least one of: the RRC release message; the RRC reconfiguration message; or the RRC resume message. The RRC release message carries the suspend configuration information. The suspend configuration information is configured to suspend the corresponding configuration information.

In an embodiment of the disclosure, the network device may send a first message carrying broadcast signaling reception configuration information to the terminal. The terminal receives, based on the broadcast signaling reception configuration information carried in the first message, a broadcast signaling carrying the second configuration information.

The first message is an SIB message or the dedicated signaling. The SIB message may be a SIBx message, where x is a positive integer. The dedicated signaling includes, but is not limited to, at least one of: the RRC release message; the RRC reconfiguration message; or the RRC resume message. The RRC release message carries the suspend configuration information. The suspend configuration information is configured to suspend the corresponding configuration information. The disclosure is not limited herein.

The broadcast signaling is an MCCH message.

For example, the network device may first send an SIB message carrying the broadcast signaling reception configuration information to the terminal, and then send the broadcast signaling carrying the second configuration information to the terminal.

For example, the network device may first send a dedicated signaling carrying the broadcast signaling reception configuration information to the terminal, and then send the broadcast signaling carrying the second configuration information to the terminal.

The dedicated signaling includes, but is not limited to, at least one of: the RRC release message; the RRC reconfiguration message; or the RRC resume message. The RRC release message carries the suspend configuration information. The suspend configuration information is configured to suspend the corresponding configuration information. The disclosure is not limited herein.

For example, if the second state is the idle state, the terminal may receive the second configuration information sent by the network device via the dedicated signaling or the broadcast signaling. The second configuration information includes idle state configuration information. Further, the second configuration information corresponds to the first service, and the first service may include the multicast service.

The dedicated signaling may be the unicast signaling, including but not limited to at least one of: the RRC release message; the RRC reconfiguration message; or the RRC resume message. In this case, the RRC release message does not carry the suspend configuration information.

In an embodiment of the disclosure, the network device may send the first message carrying the broadcast signaling reception configuration information to the terminal, and send the broadcast signaling carrying the second configuration information to the terminal.

The first message is the SIB message or the dedicated signaling. The SIB message may be the SIBx message, where x is a positive integer. The dedicated signaling includes, but is not limited to, at least one of: the RRC release message; the RRC reconfiguration message; or the RRC resume message. The RRC release message does not carry the suspend configuration information. The disclosure is not limited herein.

The broadcast signaling is the MCCH message.

For example, if the second state is the connected state, the network device sends the second configuration information to the terminal via the dedicated signaling. The second configuration information may include the connected state configuration information. Further, the second configuration information corresponds to the first service, and the first service may include the multicast service. The network device determines that the connected state configuration information is taken directly by the terminal as the target configuration information.

The dedicated signaling may be the unicast signaling, including but not limited to at least one of: the RRC release message; the RRC reconfiguration message; or the RRC resume message.

The RRC release message carries the suspend configuration information. The suspend configuration information is configured to suspend the corresponding configuration information.

For example, if the second state is the inactive state, the network device may send the second configuration information to the terminal via the dedicated signaling or the broadcast signaling. The second configuration information includes the inactive state configuration information. Further, the second configuration information corresponds to the first service, and the first service may include the multicast service. The terminal directly determines the inactive state configuration information as the target configuration information.

The dedicated signaling may be the unicast signaling, including but not limited to at least one of: the RRC release message; the RRC reconfiguration message; or the RRC resume message. The RRC release message carries the suspend configuration information. The suspend configuration information is used by the terminal to suspend the corresponding configuration information.

In an embodiment of the disclosure, the network device may first send the first message carrying the broadcast signaling reception configuration information to the terminal, and send the broadcast signaling carrying the second configuration information to the terminal.

The first message is the SIB message or the dedicated signaling. The SIB message may be the SIBx message, where x is a positive integer. The dedicated signaling includes, but is not limited to, at least one of: the RRC release message; the RRC reconfiguration message; or the RRC resume message. The RRC release message carries the suspend configuration information. The suspend configuration information is configured to suspend the corresponding configuration information. The disclosure is not limited herein.

The broadcast signaling is the MCCH message.

For example, the second configuration information may include the inactive state configuration information. Further, the second configuration information may correspond to the first service, and the first service may include the multicast service. Accordingly, the second configuration information may include the inactive state multicast configuration information.

For example, if the second state is the inactive state, the network device sends the SIBx message to the terminal. The SIBx message carries the broadcast signaling reception configuration information. Then, the network device sends the MCCH message carrying the second configuration information to the terminal. The second configuration information may include inactive state configuration information. Further, the second configuration information at least includes inactive state multicast configuration information. The network device determines that the inactive state multicast configuration information is taken directly by the terminal as the target configuration information.

For example, the network device sends the dedicated signaling carrying the broadcast signaling reception configuration information to the terminal. The network device then sends the MCCH message carrying the second configuration information to the terminal. The second configuration information may include the inactive state multicast configuration information. The network device determines that the inactive state multicast configuration information is taken directly by the terminal as the target configuration information.

For example, if the second state is the idle state, the second configuration information may include the idle state configuration information. The network device sends the idle state configuration information to the terminal via the broadcast signaling or the dedicated signaling. Further, the second configuration information corresponds to the first service, and the first service may include the multicast service. The network device determines that the idle state configuration information is taken directly by the terminal as the target configuration information.

The dedicated signaling may be the unicast signaling, including but not limited to at least one of: the RRC release message; the RRC reconfiguration message; or the RRC resume message. In this case, the RRC release message does not carry the suspend configuration information.

In an embodiment of the disclosure, the network device may first send the first message carrying the broadcast signaling reception configuration information to the terminal, and send the broadcast signaling carrying the second configuration information to the terminal.

The first message may be the SIB message or the dedicated signaling. The SIB message may be the SIBx message, where x is a positive integer. The dedicated signaling includes, but is not limited to, at least one of: the RRC release message; the RRC reconfiguration message; or the RRC resume message. The RRC release message carries the suspend configuration information. The suspend configuration information is configured to suspend the corresponding configuration information. The disclosure is not limited herein.

The broadcast signaling is the MCCH message.

In another example, upon the terminal state transition, the network device sends the second configuration information to the terminal. The network device determines that the terminal determines the target configuration information based on both the first configuration information and the second configuration information. Optionally, the terminal may merge, de-duplicate, and perform a conflict processing between the second configuration information and the first configuration information, and determine the obtained configuration information as the target configuration information. If there is a conflict in the merged target configuration information, the terminal may preferentially retain contents from the second configuration information and remove contents that conflict with the second configuration information in the first configuration information. The first configuration information is used by the terminal to perform the service data reception in a first state. The first state corresponds to a terminal state before state transition. The second configuration information is used by the terminal to perform the service data reception in a second state. The second state corresponds to a terminal state after state transition. Further, the first configuration information and the second configuration information may correspond to the same first service. The first service includes a multicast service.

For example, in the case that the terminal switches from the inactive state to the connected state, the network device may send the second configuration information to the terminal via the dedicated signaling. The second configuration information includes the connected state configuration information. Further, the second configuration information corresponds to the first service, and the first service includes the multicast service.

The dedicated signaling may be the unicast signaling, including but not limited to at least one of: the RRC release message; the RRC reconfiguration message; or the RRC resume message.

The RRC release message carries the suspend configuration information. The suspend configuration information is used by the terminal to suspend the corresponding configuration information.

For example, in the case that the terminal is in the inactive state before the terminal state transition and the network device determines that the first configuration information configured by the network device is retained by the terminal, the first configuration information includes the inactive state configuration information. Upon the terminal state transition, the terminal enters the connected state. After the network device sends the second configuration information corresponding to the connected state to the terminal, further, the first configuration information and the second configuration information may correspond to the same first service, and the first service may include the multicast service. The network device determines that the terminal merges, de-duplicates, and performs a conflict processing between the second configuration information, i.e., the connected state configuration information, and the inactive state configuration information, and determines the obtained configuration information as the target configuration information. If there is a conflict in the merged target configuration information, the terminal may preferentially retain contents from the second configuration information and remove contents that conflict with the second configuration information in the first configuration information. The network device may then send the service data to the terminal based on the target configuration information, and the terminal performs the service data reception based on the target configuration information.

For example, in the case that the terminal switches from the connected state to the inactive state, the network device may send the first configuration information to the terminal via the broadcast signaling. The first configuration information includes the inactive state configuration information. Further, the first configuration information corresponds to the first service, and the first service may include the multicast service.

For example, the network device may first send the first message carrying the broadcast signaling reception configuration information to the terminal. Further, the network device sends the broadcast signaling carrying the first configuration information to the terminal. Further, the first configuration information corresponds to the first service, and the first service may include the multicast service.

For example, the first message may be the SIB message or the dedicated signaling. The SIB message may be the SIBx message, where x is a positive integer. The dedicated signaling includes, but is not limited to, at least one of: the RRC release message; the RRC reconfiguration message; or the RRC resume message. The RRC release message carries the suspend configuration information. The suspend configuration information is configured to suspend the corresponding configuration information. The disclosure is not limited herein.

For example, the broadcast signaling is the MCCH message.

For another example, in the case that the terminal is in the connected state before the terminal state transition and the network device determines that the first configuration information configured by the network device is retained by the terminal, the first configuration information includes the connected state configuration information. Upon the terminal state transition, the terminal enters the inactive state. In the case that the network device sends the second configuration information corresponding to the inactive state to the terminal, the network device determines that the terminal merges, de-duplicates, and performs a conflict processing between the second configuration information, i.e., the inactive state configuration information, and the connected state configuration information, and determines the obtained configuration information as the target configuration information. If there is a conflict in the merged target configuration information, the terminal may preferentially retain contents from the second configuration information and remove contents that conflict with the second configuration information in the first configuration information. The network device may then send the service data to the terminal based on the target configuration information, and the terminal performs the service data reception based on the target configuration information. The first configuration information and the second configuration information correspond to the same first service. The first service includes the multicast service.

The above is only an exemplary illustration. The scheme of determining, by the network device, that the terminal merges, de-duplicates, and performs a conflict processing between the first configuration information adopted by the terminal before the terminal state transition and the second configuration information received after the terminal state transition (if there is a conflict in the merged target configuration information, the terminal may preferentially retain contents from the second configuration information and remove contents that conflict with the second configuration information in the first configuration information) and determines the obtained configuration information as the target configuration information shall fall within the scope of protection of the disclosure.

In another example, upon the terminal state transition and in the case that the network device does not send the second configuration information to the terminal, the network device determines the first configuration information is taken by the terminal as the target configuration information. The first configuration information is used by the terminal to perform service data reception in a first state, and the first state corresponds to a terminal state before state transition. The second configuration information is used by the terminal to perform service data reception in a second state, and the second state corresponds to a terminal state after state transition. Further, the first configuration information and the second configuration information correspond to the same first service, and the first service includes the multicast service.

For example, in the case that the terminal is in the inactive state before the terminal state transition and the network device determines that the first configuration information configured by the network device is retained by the terminal, the first configuration information includes the inactive state configuration information. In the case that the terminal enters the connected state after the terminal state transition and the network device does not send the second configuration information corresponding to the connected state to the terminal, the network device determines that the first configuration information, i.e., the inactive state configuration information, is taken by the terminal as the target configuration information. The network device may then send the service data to the terminal based on the inactive state configuration information, and the terminal performs the service data reception based on the inactive state configuration information. Further, the first configuration information and the second configuration information correspond to the same first service, and the first service includes the multicast service.

For another example, in the case that the terminal is in the connected state before the terminal state transition and the network device determines that the first configuration information configured by the network device is retained by the terminal, the first configuration information includes the connected state configuration information. In the case that the terminal enters the inactive state after the terminal state transition and the network device does not send the second configuration information corresponding to the inactive state to the terminal, the network device determines that the first configuration information, i.e., the connected state configuration information, is taken by the terminal as the target configuration information. The network device may then send the service data to the terminal based on the connected state configuration information, and the terminal performs the service data reception based on the connected state configuration information. Further, the first configuration information and the second configuration information correspond to the same first service, and the first service includes the multicast service.

For another example, in the case that the terminal is in the idle state before the terminal state transition and the network device determines that the first configuration information configured by the network device is retained by the terminal, the first configuration information includes the idle state configuration information. In the case that the terminal enters the connected state after the terminal state transition and the network device does not send the second configuration information corresponding to the connected state to the terminal, the network device determines that the first configuration information, i.e., the idle state configuration information, is taken by the terminal as the target configuration information. The network device may then send the service data to the terminal based on the idle state configuration information, and the terminal performs the service data reception based on the idle state configuration information. Further, the first configuration information and the second configuration information correspond to the same first service, and the first service includes the multicast service.

The above is only an exemplary illustration. The scheme of determining, by the network device, that the first configuration information adopted by the terminal before the terminal state transition is taken by the terminal as the target configuration information in the case that the network device does not send the second configuration information to the terminal shall fall within the scope of protection of the disclosure.

In another example, upon the terminal state transition, the network device may configure the second configuration information for the terminal in an incremental configuration manner. The network device determines that the terminal merges, de-duplicates, and performs a conflict processing between the second configuration information and the first configuration information, and determines the obtained configuration information as the target configuration information, so as to perform the service data reception in the second state. If there is a conflict in the merged target configuration information, the terminal may preferentially retain contents from the second configuration information and remove contents that conflict with the second configuration information in the first configuration information. The first configuration information and the second configuration information correspond to the same first service. The first service includes the multicast service.

The specific method of determining, by the network device, the target configuration information is illustrated in the above embodiments and will not be repeated herein.

Alternatively, upon the terminal state transition, the network device configures the second configuration information in a full-configuration manner. Further, the network device determines that the second configuration information is taken by the terminal as the target configuration information and the service data reception is performed by the terminal in the second state. At the same time, the network device determines that the first configuration information is not released by the terminal. In this case, not releasing the first configuration information includes, but is not limited to, at least one of: not deleting the first configuration information; using the first configuration information; or retaining the first configuration information. Further, the first configuration information and the second configuration information may correspond to the same first service, and the first service includes the multicast service.

For example, in the case that the terminal switches from the inactive state to the connected state, in which the second state is the connected state, the network device may determine that the terminal merges, de-duplicates, and performs a conflict processing between the first configuration information (inactive state configuration information) and the second configuration information (connected state configuration information) by the terminal, and determines the obtained configuration information as the target configuration information. If there is a conflict in the merged target configuration information, the terminal may preferentially retain contents from the second configuration information and remove contents that conflict with the second configuration information in the first configuration information. The terminal then performs the service data reception in the connected state based on the target configuration information

For another example, in the case that the terminal switches from the inactive state to the connected state, in which the second state is the connected state, the network device determines that the second configuration information (connected state configuration information) is taken by the terminal as the target configuration information. The terminal then performs the service data reception in the connected state based on the target configuration information. At the same time, the network device determines that the first configuration information (the inactive state configuration information) is not released by the terminal. In this case, not releasing the inactive state configuration information includes, but is not limited to, at least one of: not deleting the inactive state configuration information; performing the service data reception in the inactive state using the inactive state configuration information; or retaining the inactive state configuration information.

In another possible implementation, the base station determines that the target configuration information to be used by the terminal. Further, the network device determines that first configuration information is released by the terminal. The first configuration information is used by the terminal to perform the service data reception in the first state, and the first state corresponds to the terminal state before state transition. Further, the first configuration information may correspond to the first service, and the first service includes the multicast service.

In an example, releasing the first configuration information includes, but is not limited to, at least one of: deleting the first configuration information; not using the first configuration information; or not retaining the first configuration information.

In another possible implementation, the base station determines that the target configuration information to be used by the terminal. Further, the network device determines that first configuration information is not released by the terminal. The first configuration information is used by the terminal to perform the service data reception in the first state, and the first state corresponds to the terminal state before state transition. Further, the first configuration information may correspond to the first service, and the first service includes the multicast service.

In an example, not releasing the first configuration information includes, but is not limited to, at least one of: not deleting the first configuration information; using the first configuration information; or retaining the first configuration information.

In another possible implementation, the network device may determine that the first configuration information is released by the terminal whether the terminal receives the second configuration information sent by the network device after the terminal state transition. In this case, releasing the first configuration information includes, but is not limited to, at least one of: deleting the first configuration information; not using the first configuration information; or not retaining the first configuration information.

In an example, upon the terminal state transition, the network device may determine that the first configuration information is released by the terminal. In this case, releasing the first configuration information includes, but is not limited to, at least one of: deleting the first configuration information; not using the first configuration information; or not retaining the first configuration information. If the network device sends the second configuration information to the terminal, the network device determines that the terminal takes the second configuration information as the target configuration information, and performs the service data reception based on the second configuration information.

For example, in the case that the terminal state is switched from the inactive state to the connected state, the network device determines that the inactive state configuration information is released by the terminal. In this case, releasing the first configuration information includes, but is not limited to, at least one of: deleting the first configuration information; not using the first configuration information; or not retaining the first configuration information. If the network device sends the connected state configuration information to the terminal, the network device determines that the terminal takes the connected state configuration information as the target configuration information, and performs the service data reception based on the connected state configuration information.

For another example, in the case that the terminal state is switched from the inactive state to the connected state, the network device may determine that the connected state configuration information is released by the terminal. In this case, releasing the first configuration information includes, but is not limited to, at least one of: deleting the first configuration information; not using the first configuration information; or not retaining the first configuration information. If the network device sends the inactive state configuration information to the terminal, the network device determines that the terminal takes the inactive state configuration information as the target configuration information, and performs the service data reception based on the inactive state configuration information.

In another example, upon that the terminal state transition, the network device may determine that the first configuration information is released by the terminal. In this case, releasing the first configuration information includes, but is not limited to, at least one of: deleting the first configuration information; not using the first configuration information; or not retaining the first configuration information. If the network device does not send the second configuration information to the terminal, the network device determines that the service data reception is not performed by the terminal any more.

For example, in the case that the terminal state is switched from the inactive state to the connected state, the network device determines that the inactive state configuration information is released by the terminal. In this case, releasing the first configuration information includes, but is not limited to, at least one of: deleting the first configuration information; not using the first configuration information; or not retaining the first configuration information. If the network device does not send the connected state configuration information to the terminal, the network device determines that the service data reception is not performed by the terminal any more.

For another example, in the case that the terminal state is switched from the connected state to the inactive state, the network device determines that the connected state configuration information is released by the terminal. In this case, releasing the first configuration information includes, but is not limited to, at least one of: deleting the first configuration information; not using the first configuration information; or not retaining the first configuration information. If the network device does not send the inactive state configuration information to the terminal, the network device determines that the service data reception is not performed by the terminal any more.

In the above embodiments, upon the terminal state transition, the network device may determine the target configuration information to be used by the terminal. In the case that there are a plurality of sets of configuration information configured by the network device in the terminal, the target configuration information to be used by the terminal to perform the service data reception may still be determined. This ensures a consistent understanding between the network device and the terminal, which improves the reliability of multicast service data transmission, and provides high availability.

In some optional embodiments, referring to FIG. 6, it is a flow chart illustrating a method for information determination according to an exemplary embodiment. The method may be performed by a network device. The network device may include, but is not limited to, a base station, an access network device, etc. The base station may be a 4G base station, a 5G base station, or a future 6G base station. The access network device may be a 4G access network device, a 5G access network device, a future 6G access network device, etc. The method may include the following step 601.

At step 601, upon a terminal state transition, it is determined that whether the terminal is to receive first configuration information.

In some embodiments of the disclosure, the terminal state includes, but is not limited to: a connected state (also referred to as an active state), an idle state, and an inactive state.

In an embodiment of the disclosure, the terminal state transition includes, but is not limited to, transition from the connected state (also referred to as the active state) to the idle state; transition from the connected state to the inactive state; transition from the idle state to the connected state; transition from the idle state to the inactive state; transition from the inactive state to the connected state; or transition from the inactive state to the idle state.

The above is only an exemplary illustration, and all the cases of the terminal state transition in the practical applications shall fall within the scope of protection of the disclosure.

The first configuration information is used by the terminal to perform the service data reception in a first state. The first state corresponds to a terminal state before state transition. The first configuration information includes, but is not limited to, relevant information required for the terminal to perform the service data reception in the first state, such as a time domain resource location and a frequency domain resource location when the terminal receives service data, and a beam identifier used by a network device to send the service data.

For example, if the terminal state before state transition is in the first state and the first state is the connected state, the first configuration information may include connected state configuration information.

For example, if the terminal state before state transition is in the first state and the first state is the inactive state, the first configuration information may include inactive state configuration information.

For example, if the terminal state before state transition is in the first state and the first state is the idle state, the first configuration information may include configuration information corresponding to the idle state.

In a possible implementation, upon the terminal state transition, the network device determines whether the terminal is to receive the first configuration information based on whether the terminal performs the service data reception using the first configuration information.

In an example, upon the terminal state transition and in the case that the terminal performs the service data reception using the first configuration information, the network device determines that the terminal is to receive the first configuration information .

For example, in the case that the terminal state is switched from the inactive state to the connected state, the first configuration information includes the inactive state configuration information, and if the terminal performs the service data reception using the inactive state configuration information after the terminal enters the connected state, the network device may determine that the terminal is to receive the inactive state configuration information.

For another example, in the case that the terminal state is switched from the connected state to the inactive state, the first configuration information includes the connected state configuration information, and if the terminal performs the service data reception using the connected state configuration information after the terminal enters the inactive state, the network device may determine that the terminal is to receive the connected state configuration information.

In another example, upon the terminal state transition and in the case that the terminal does not perform the service data reception using the first configuration information, e.g., performs the service data reception using the second configuration information or does not perform the service data reception, the network device determines that the first configuration information is not received by the terminal.

For example, in the case that the terminal state is switched from the inactive state to the connected state, the first configuration information includes inactive state configuration information, and if the terminal performs the service data reception using connected state configuration information after the terminal enters the connected state, the network device determines that the inactive state configuration information is not received by the terminal.

For another example, in the case that the terminal state is switched from the inactive state to the connected state, the first configuration information includes the inactive state configuration information, and if the terminal does not perform the service data reception after the terminal enters the connected state, the network device determines that the inactive state configuration information is not received by the terminal.

In a possible implementation, upon the terminal state transition, whether the terminal is to receive the first configuration information is determined based on whether the terminal performs the service data reception.

In an example, upon the terminal state transition and in the case that the terminal performs the service data reception, the network device determines that the terminal is to receive the first configuration information.

For example, in the case that the terminal state is switched from the inactive state to the connected state, the first configuration information includes the inactive state configuration information, and if the terminal performs the service data reception after the terminal enters the connected state, in particular, the terminal performs the service data reception after the terminal enters the connected state using the first configuration information (inactivated state configuration information), the second configuration information (connected state configuration information), or the target configuration information (obtained based on both the first configuration information and the second configuration information), the network device determines that the terminal is to receive the inactivated state configuration information.

In an example, upon the terminal state transition and in the case that the terminal does not perform the service data reception, the network device determines that the terminal is not to receive the first configuration information.

For example, in the case that the terminal state is switched from the inactive state to the connected state, the first configuration information includes the inactive state configuration information, and if the terminal does not perform the service data reception after the terminal enters the connected state, the network device determines that the terminal is not to receive inactive state configuration information.

In a possible implementation, the first configuration information and the second configuration information may correspond to the same first service, and the first service may include but is not limited to a multicast service.

In an example, in the case that the terminal is switched from the inactive state to the connected state, the first configuration information may include the inactive state configuration information, and the second configuration information may include the connected state configuration information. Further, the first configuration information and the second configuration information may correspond to the same first service, and the first service may include but is not limited to the multicast service.

In another embodiment, in the case that the terminal is switched from the inactive state to the idle state, the first configuration information may include the inactive state configuration information, and the second configuration information may include idle state configuration information. Further, the first configuration information and the second configuration information may correspond to the same first service, and the first service may include but is not limited to the multicast service.

In another example, in the case that the terminal is switched from the connected state to the inactive state, the first configuration information may include the connected state configuration information, and the second configuration information may include the inactive state configuration information. Further, the first configuration information and the second configuration information may correspond to the same first service, and the first service may include but is not limited to the multicast service.

In another example, in the case that the terminal is switched from the connected state to the idle state, the first configuration information may include the connected state configuration information, and the second configuration information may include the idle state configuration information. Further, the first configuration information and the second configuration information may correspond to the same first service, and the first service may include but is not limited to the multicast service.

In another example, in the case that the terminal is switched from the idle state to the connected state, the first configuration information may include the idle state configuration information, and the second configuration information may include the connected state configuration information. Further, the first configuration information and the second configuration information may correspond to the same first service, and the first service may include but is not limited to the multicast service.

In another example, in the case that the terminal is switched from the idle state to the inactive state, the first configuration information may include the idle state configuration information, and the second configuration information may include the inactive state configuration information. Further, the first configuration information and the second configuration information may correspond to the same first service, and the first service may include but is not limited to the multicast service.

In a possible implementation, in the case that the first configuration information is determined to be received by the terminal, the network device may send a broadcast signaling (not shown in FIG. 6) carrying the first configuration information to the terminal. Further, the first configuration information corresponds to the first service, and the first service may include the multicast service.

In an example, the first configuration information includes the inactive state configuration information. Further, the first configuration information corresponds to the first service, and the first service may include the multicast service.

In an example, the network device may first send a first message carrying broadcast signaling reception configuration information to the terminal. Further, corresponding to the first service, the first service may include a multicast service. The network device then sends the broadcast signaling carrying the first configuration information to the terminal.

For example, the first message may be an SIB message or a dedicated signaling. The SIB message may be a SIBx message, where x is a positive integer. The dedicated signaling includes, but is not limited to, at least one of: an RRC release message; an RRC reconfiguration message; or an RRC resume message. The RRC release message carries suspend configuration information. The suspend configuration information is configured to suspend corresponding configuration information. The disclosure is not limited herein.

For example, the broadcast signaling is an MCCH message.

In an embodiment of the disclosure, the network device may first send the SIBx message carrying the broadcast signaling reception configuration information to the terminal. Further, the network device sends the MCCH message carrying the inactive state configuration information.

Alternatively, the network device may first send the dedicated signaling carrying the broadcast signaling reception configuration information to the terminal. Further, the network device sends the MCCH message carrying the inactive state configuration information to the terminal. The dedicated signaling includes, but is not limited to, at least one of: the RRC release message; the RRC reconfiguration message; or the RRC resume message. The RRC release message carries the suspend configuration information. The suspend configuration information is configured to suspend the corresponding configuration information. The disclosure is not limited herein.

The above is only an exemplary illustration. The scheme of determining, by the network device, that the terminal is to receive the first configuration information and the scheme of sending the first configuration information to the terminal via the corresponding message or the corresponding signaling shall fall within the scope of protection of the disclosure.

In another possible implementation, in the case that the first configuration information is determined to be received by the terminal and the terminal is in the connected state, the network device may send the dedicated signaling (not shown in FIG. 6) carrying the first configuration information to the terminal. Further, the first configuration information corresponds to the first service, and the first service may include the multicast service.

The dedicated signaling may be a unicast signaling, including but not limited to at least one of: the RRC release message; the RRC reconfiguration message; or the RRC resume message.

The RRC release message carries the suspend configuration information. The suspend configuration information is configured to suspend the corresponding configuration information.

In a possible implementation, in the case that the first message is the SIB message, the network device sends the broadcast signaling reception configuration information to the terminal via the SIB message, and thus sends the broadcast signaling carrying the first configuration information to the terminal. If the network device determines that the terminal is not to receive the first configuration information , the network device may determine that the first message, i.e., the SIB message, carrying the broadcast signaling reception configuration information, is not monitored by the terminal, and/or the broadcast signaling (not shown in FIG. 6) carrying the first configuration information is not monitored by the terminal.

For example, the SIB message may be the SIBx message, where x is a positive integer. The disclosure is not limited herein.

For example, the broadcast signaling is the MCCH message.

In an embodiment of the disclosure, the network device determines that the SIBx message carrying the broadcast signaling reception configuration information is not monitored by the terminal and/or the MCCH message carrying the first configuration information is not monitored by the terminal.

In another possible implementation, in the case that the first message is the dedicated signaling, the network device sends the dedicated signaling carrying the broadcast signaling reception configuration information to the terminal, and thus sends the broadcast signaling carrying the first configuration information to the terminal. If the network device determines that the terminal is not to receive the first configuration information , the network device determines that a paging message for notifying a broadcast signaling configuration update is not monitored by the terminal, and/or the broadcast signaling (not shown in FIG. 6) carrying the first configuration information is not monitored by the terminal.

The dedicated signaling includes, but is not limited to, at least one of: the RRC release message; the RRC reconfiguration message; or the RRC resume message. The RRC release message carries the suspend configuration information. The suspend configuration information is configured to suspend the corresponding configuration information.

For example, the broadcast signaling is the MCCH message.

In an embodiment of the disclosure, the network device determines that the paging message for notifying the broadcast signaling configuration update is not monitored by the terminal and/or the MCCH message carrying the first configuration information is not monitored by the terminal.

In another possible implementation, in the case that the network device determines that the terminal is not to receive the first configuration information , the network device may determine that the dedicated signaling (not shown in FIG. 6) carrying the first configuration information is not monitored by the terminal.

The dedicated signaling may be the unicast signaling, including but not limited to at least one of: the RRC release message; the RRC reconfiguration message; or the RRC resume message. The RRC release message carries the suspend configuration information. The suspend configuration information is configured to suspend the corresponding configuration information.

The above is only an exemplary illustration. The scheme of determining, by the network device, that the terminal is not to receive the first configuration information and execution of a corresponding terminal action is stopped by the terminal shall fall within the scope of protection of the disclosure.

In the above embodiments, upon the terminal state transition, the network device may determine whether the terminal is to receive the first configuration information. In the case of determining the terminal is to receive the first configuration information, the first configuration information may be sent to the terminal using the above-described scheme. In the case of determining the terminal is not to receive the first configuration information, it may be determined that the terminal does not monitor the corresponding message any more. This ensures a consistent understanding between the network device and the terminal, and provides high availability.

In some optional embodiments, referring to FIG. 7, it is a flow chart illustrating a method for information determination according to an exemplary embodiment. The method may be performed by a network device. The network device may include, but is not limited to, a base station, an access network device, etc. The base station may be a 4G base station, a 5G base station, or a future 6G base station. The access network device may be a 4G access network device, a 5G access network device, a future 6G access network device, etc. The method may include the following steps 701 to 702.

At step 701, upon a terminal state transition, target configuration information to be used by a terminal is determined.

The implementation of step 701 is similar to step 501 described above and will not be repeated herein.

At step 702, whether the terminal is to receive first configuration information is determined.

The implementation of step 702 is similar to step 601 described above and will not be repeated herein.

In the above embodiments, upon the terminal state transition, a network device may determine the target configuration information to be used by the terminal, and determine whether the terminal is to receive the first configuration information. In the case that there are a plurality of sets of configuration information configured by the network device in the terminal, the behavior of the terminal is clarified. This ensures a consistent understanding between the network device and the terminal, which improves the reliability of multicast service data transmission and provides high availability.

In some optional embodiments, in the case that the terminal switches from an inactive state to a connected state and the terminal determines to receive the first configuration information, the network device may send a broadcast signaling carrying the first configuration information to the terminal. Further, the first configuration information corresponds to a first service, and the first service may include the multicast service.

In an embodiment of the disclosure, the network device may first send a first message carrying broadcast signaling reception configuration information to the terminal. Further, the network device sends the broadcast signaling carrying the first configuration information to the terminal.

For example, the first message may be an SIB message or a dedicated signaling. The SIB message may be a SIBx message, where x is a positive integer. The dedicated signaling includes, but is not limited to, at least one of: an RRC release message; an RRC reconfiguration message; or an RRC resume message. The RRC release message does not carry suspend configuration information. The disclosure is not limited herein.

In a possible implementation, the broadcast signaling is an MCCH message.

For example, the network device may send the SIBx message carrying the broadcast signaling reception configuration information to the terminal. Further, the network device sends the MCCH message carrying the first configuration information to the terminal.

For example, the network device may send a dedicated signaling carrying the broadcast signaling reception configuration information to the terminal. Further, the network device sends the MCCH message carrying the first configuration information to the terminal.

The dedicated signaling includes, but is not limited to, at least one of: the RRC release message; the RRC reconfiguration message; or the RRC resume message. The RRC release message does not carry the suspend configuration information. The disclosure is not limited herein.

In a possible implementation, the first configuration information includes inactive state configuration information. The network device may send the inactive state configuration information to the terminal via the MCCH message. The terminal receives the MCCH message based on the broadcast signaling reception configuration information carried in the SIBx message or in the dedicated signaling sent by the network device.

In another example, in the case that the terminal switches from an inactive state to a connected state and the network device determines that the terminal is to receive the first configuration information, in which the terminal is in the connected state, the network device may send the dedicated signaling carrying the first configuration information to the terminal. Further, the first configuration information corresponds to the first service, and the first service may include the multicast service.

The dedicated signaling may be the unicast signaling, including but not limited to at least one of: the RRC release message; the RRC reconfiguration message; or the RRC resume message. The RRC release message carries the suspend configuration information. The suspend configuration information is configured to suspend the corresponding configuration information.

In some optional embodiments, in the case that the terminal switches from the inactive state to the connected state, the network device may send the second configuration information to the terminal via the dedicated signaling. The second configuration information may include but is not limited to connected state configuration information.

In a possible implementation, the dedicated signaling may be the unicast signaling, including at least one of: the RRC release message; the RRC reconfiguration message; or the RRC resume message.

In an example, the RRC release message carries the suspend configuration information. The suspend configuration information is configured to suspend the corresponding configuration information.

In a possible implementation, the second configuration information includes the connected state configuration information. The network device may send the connected state configuration information to the terminal via at least one of the RRC release message; the RRC reconfiguration message; or the RRC resume message. The RRC release message carries the suspend configuration information. The suspend configuration information is configured to suspend the corresponding configuration information. Further, the second configuration information corresponds to the first service, and the first service may include the multicast service.

In the above embodiments, in the case that there are a plurality of sets of configuration information configured by the network device in the terminal, a consistent understanding between the network device and the terminal is ensured. This improves the reliability of multicast service data transmission and provides high availability.

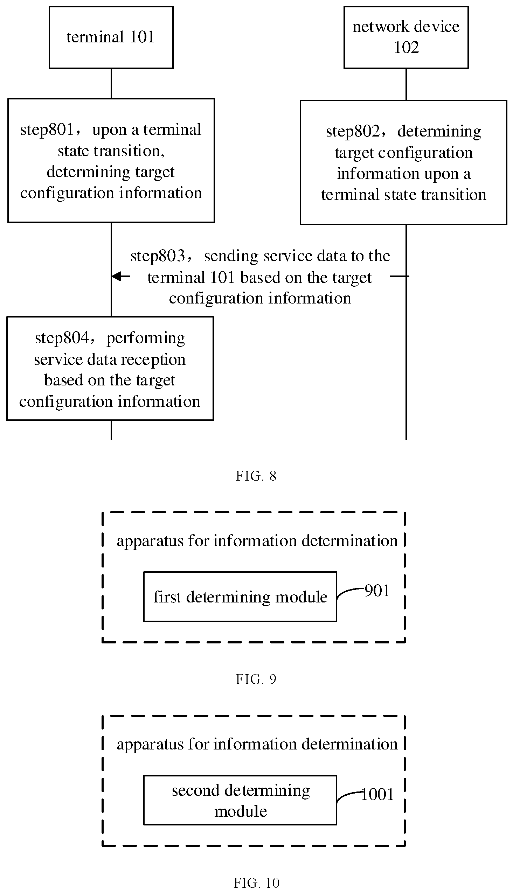

Referring to FIG. 8, it is a flow chart illustrating a method for information determination according to an exemplary embodiment. The method may be applied to a network architecture illustrated in FIG. 1, and includes the following steps 801 to 804.

At step 801, upon a terminal state transition, a terminal 101 determines target configuration information to be used.

The implementation of step 801 is similar to step 201 described above and will not be repeated herein.

At step 802, upon the terminal state transition, a network device 102 determines the target configuration information to be used by the terminal 101.

The implementation of step 802 is similar to step 501 described above and will not be repeated herein.

At step 803, the network device 102 sends service data to the terminal 101 based on the target configuration information.

At step 804, the terminal 101 performs service data reception based on the target configuration information.

In a possible implementation, the network device 102 may determine whether the terminal 101 is to receive first configuration information (not shown in FIG. 8). The determination is similar to step 601 described above and will not be repeated herein.

In the case that the network device 102 determines that the terminal 101 is to receive the first configuration information, the first configuration information may be sent to the terminal 101. The sending manner is described in the above embodiments and will not be repeated herein.

In the case that the network device 102 determines that the terminal 101 is not to receive the first configuration, it may be determined that the terminal 101 does not monitor a first message carrying broadcast signaling reception configuration information, and/or a broadcast signaling carrying the first configuration information. Alternatively, in the case that the network device 102 determines that the terminal 101 is not to receive the first configuration, it may be determined that the terminal 101 does not monitor a paging message for notifying a broadcast signaling configuration update, and/or the broadcast signaling carrying the first configuration information. Alternatively, in the case that the network device 102 determines that the terminal 101 is not to receive the first configuration, it may be determined that the terminal 101 does not monitor a unicast signaling carrying the first configuration information.

The terminal 101 determines whether to receive the first configuration information (not shown in FIG. 8). The determination is similar to step 301 described above and will not be repeated herein. In the case that the terminal 101 determines to receive the first configuration information, the terminal may receive the first configuration information sent by the network device 102. The reception manner is described in the above embodiments and will not be repeated herein.

In the case that the terminal 101 determines not to receive the first configuration information, the terminal may not monitor the first message carrying the broadcast signaling reception configuration information, and/or the broadcast signaling carrying the first configuration information. Alternatively, in the case that the terminal 101 determines not to receive the first configuration information, the terminal 101 may not monitor the paging message for notifying the broadcast signaling configuration update, and/or the broadcast signaling carrying the first configuration information. Alternatively, in the case that the terminal 101 determines not to receive the first configuration information, terminal 101 may not monitor the unicast signaling carrying the first configuration information.

In the above embodiments, in the case that there are a plurality of sets of configuration information in the terminal, a consistent understanding of the target configuration information to be used by the network device and the terminal is ensured. The network device then provides the service data to the terminal based on the target configuration information, and the terminal performs the service data reception based on the target configuration information. This improves the reliability of multicast service data transmission, and provides high availability.

In another embodiment, in the case that the terminal is in a first state, the terminal receives service data of a first service using the first configuration information. In the case that the terminal switches to a second state, the terminal determines the target configuration information for receiving the service data of the first service.

The first state may be one of: an RRC connected state, an RRC non-connected state (e.g., an RRC inactive state or an RRC idle state). The second state may be one of: an RRC connected state, an RRC non-connected state (e.g., an RRC inactive state or an RRC idle state), and the second state is different from the first state.

The first service may include a multicast service. It should be noted that the first service has different configuration information in different terminal states, all of which may be applied to the technical solution provided in the disclosure. The disclosure does not make specific requirements for the specific service and the service type of the first service.

In a possible implementation, the terminal determines second configuration information as target configuration information. The second configuration information may be predefined or be sent to the terminal by the network device. In an example, the network device may send the second configuration information to the terminal before the terminal switches to the second state, e.g., when the terminal is in the first state or the terminal switches to other state before the first state. In another example, the network device may send the second configuration information to the terminal after the terminal switches to the second state. The second configuration information is different from the first configuration information.

In an example, after determining the second configuration information as the target configuration information, the terminal may not release the first configuration information or release the first configuration information.

In this case, not releasing the first configuration information includes, but is not limited to, at least one of: not deleting the first configuration information; using the first configuration information; or retaining the first configuration information. In this case, releasing the first configuration information includes, but is not limited to, at least one of: deleting the first configuration information; not using the first configuration information; or not retaining the first configuration information.

In another possible implementation, the terminal determines the target configuration information based on the first configuration information and the second configuration information. For the contents of the second configuration information reference may be made to the introduction of the relevant contents in the previous possible implementations, which will not be repeated herein. In an example, after switching to the second state, the terminal may receive the first service using the second configuration information in priority. That is, after switching to the second state, the terminal receives the service data of the first service using the second configuration information when communication resources have been configured by the terminal based on the second configuration information. Alternatively, after switching to the second state, the terminal receives the service data of the first service using the first configuration information when communication resources have been not configured by the terminal based on the second configuration information.

In another possible implementation, after switching to the second state, if the terminal does not receive the second configuration information yet, the terminal receives the service data of the first service using the first configuration information.

For example, if the terminal does not receive the second configuration information sent by the network device in the preset time period after the terminal state transition, it is determined that the second configuration information sent by the network device is not received.

Here, it is taken as an example for illustration that the first state is the RRC inactive state or the RRC idle state, the second state is the connected state, and the first service is the multicast service.

For example, in the case that the terminal is in the RRC inactive state or the RRC idle state, the terminal receives data of the multicast service using the first configuration information. The first configuration information is configuration information of the terminal to receive the multicast service in the inactive state or the idle state, and is also referred to as inactive state configuration information or idle state configuration information. For example, the inactive state configuration information or the idle state configuration information may be carried in a broadcast signaling, and the broadcast signaling may be an MCCH message.

The terminal may first receive the first message sent by the network device. The first message may include an SIB message or a dedicated signaling that carries broadcast signaling reception configuration information. The terminal receives a broadcast signaling (such as the MCCH message) that carries the inactive state configuration information or the idle state configuration information, based on the broadcast signaling reception configuration information.

The dedicated signaling may be a unicast signaling, including but not limited to at least one of: an RRC release message; an RRC reconfiguration message; or an RRC resume message. The SIB message may be a SIBx message, where x is a positive integer.

In the case that the terminal switches from the first state to the second state, the terminal directly determines the second configuration information as the target configuration information for receiving the data of the multicast service. The second configuration information is configuration information of the terminal to receive the multicast service in the RRC connected state, and is also referred to as connected state configuration information. For example, the connected state configuration information may be carried in the dedicated signaling. The dedicated signaling includes, but is not limited to, an RRC reconfiguration message, an RRC release message carrying a suspend configuration, and an RRC resume response message to be sent.

Alternatively, after switching from the first state to the second state, the terminal determines the target configuration information based on both the inactive state configuration information and the connected state configuration information. The determination methods include, but are not limited to, merging, de-duplication, and performing a conflict processing. The specific implementations are described in the above embodiments and will not be repeated herein.

Alternatively, after switching from the first state to the second state, the terminal does not receive the connected state configuration information, and the terminal determines retained inactive state configuration information or idle state configuration information as the target configuration information.

For other contents of this embodiment reference may be made to the previous description of other embodiments and details will not be repeated herein.

In another embodiment, in the case that the terminal is in the first state, the terminal receives the service data of a first service using the first configuration information. In the case that the terminal switches to the second state, the terminal determines to release the first configuration information.

In a possible implementation, in the case that the terminal receives the second configuration information, the terminal receives the service data of the first service using the second configuration information. In an example, the network device may send the second configuration information to the terminal before the terminal switches to the second state, e.g., when the terminal is in the first state or the terminal switches to other state before the first state. In another example, the network device may send the second configuration information to the terminal after the terminal switches to the second state. The second configuration information is different from the first configuration information.

In another possible implementation, in the case that the terminal does not receive the second configuration information, the terminal stops reception of the service data of the first service.

Here, it is taken as an example for illustration that the first state is the RRC inactive state or the RRC idle state, the second state is the connected state, and the first service is the multicast service.

For example, in the case that the terminal is in the RRC inactive state or the RRC idle state, the terminal receives the data of the multicast service using the first configuration information. The first configuration information is configuration information of the terminal to receive the multicast service in the inactive state or the idle state, and is also referred to as inactive state configuration information or idle state configuration information.

In the case that the terminal switches from the first state to the second state, the second state is the connected state and the terminal receives the second configuration information, the terminal receives the service data of the first service using the second configuration information, i.e., the connected state configuration information. The first service may include the multicast service. The first configuration information is configuration information of the terminal to receive the multicast service in the inactive state or the idle state, and is also referred to as inactive state configuration information or idle state configuration information. That is, in the case that the terminal is in the RRC inactive state or the RRC idle state, the terminal receives the data of the multicast service using the first configuration information.

Alternatively, in the case that the terminal switches from the first state to the second state, the second state is the connected state and the terminal receives the second configuration information, the terminal determines the target configuration information based on both the first configuration information and the second configuration information. For example, the target configuration information is obtained by merging, de-duplicating, and performing a conflict processing between the first configuration information and the second configuration information. Then, the service data of the first service is received based on the target configuration information. The first service may include the multicast service. The target configuration information is configuration information of the terminal to receive the multicast service in a current state, i.e., the connected state. That is, in the case that the terminal is in the RRC connected state, the terminal receives the data of the multicast service using the target configuration information that is determined based on both the first configuration information and the second configuration information.

Alternatively, in the case that the terminal switches from the first state to the second state, the second state is the connected state and the terminal does not receive the second configuration information, the terminal receives the service data of the first service using the first configuration information, i.e., the inactive state configuration information or the idle state configuration information. The first service may include the multicast service. The first configuration information is configuration information of the terminal to receive the multicast service in the inactive state or the idle state, and is also referred to as inactive state configuration information or idle state configuration information. That is, in the case that the terminal does not receive the second configuration information (i.e., the connected state configuration information) sent by the network device in the current state (i.e., the connected state), the terminal receives the data of the multicast service using the first configuration information in the inactive state or in the idle state. For other contents of this embodiment reference may be made to the previous description of other embodiments and details will not be repeated herein.

In another embodiment, in the case that the terminal is in the first state, the terminal receives the service data of a first service using the first configuration information. In the case that the terminal switches to the second state, the terminal determines whether to receive the first configuration information.

The first state may be one of: the RRC connected state, the RRC non-connected state (e.g., the RRC inactive state or the RRC idle state). The second state may be one of: the RRC connected state, the RRC non-connected state (e.g., the RRC inactive state or the RRC idle state), and the second state is different from the first state.

The first service may include a multicast service. It should be noted that the first service has different configuration information in different terminal states, all of which may be applied to the technical solution provided in the disclosure. The disclosure does not make specific requirements for the specific service and the service type of the first service.

In a possible implementation, determining whether to receive the first configuration information by the terminal includes: determining whether to receive the first configuration information based on whether the terminal in the connected state performs the service data reception using the first configuration information.

Here, it is taken as an example for illustration that the first state is the RRC inactive state or the RRC idle state, the second state is the connected state, and the first service is the multicast service.

For example, in the case that the terminal is in the RRC inactive state or the RRC idle state, the terminal receives the data of the multicast service using the first configuration information. The first configuration information is configuration information of the terminal to receive the multicast service in the inactive state or the idle state, and is also referred to as inactive state configuration information or idle state configuration information.

In the case that the terminal switches from the first state to the second state and the terminal receives the multicast service using the first configuration information, the terminal determines to receive the first configuration information.

Alternatively, in the case that the terminal switches from the first state to the second state and the terminal does not receive the multicast service using the first configuration information, for example, the terminal performs the service data reception using the second configuration information or does not perform the service data reception, the terminal determines not to receive the first configuration information any more.

In another possible implementation, the terminal determines whether to receive the first configuration information based on whether the terminal performs the service data reception. In this case, receiving the first configuration information includes at least one of: receiving the broadcast signaling carrying the first configuration information (e.g., receiving the MCCH message); or receiving the first message carrying the broadcast signaling reception configuration information (e.g., receiving the SIBx message or the dedicated signaling).

Here, it is taken as an example for illustration that the first state is the RRC inactive state or the RRC idle state, the second state is the connected state, and the first service is the multicast service.

For example, in the case that the terminal is in the RRC inactive state or the RRC idle state, the terminal receives the data of the multicast service using the first configuration information. The first configuration information is configuration information of the terminal to receive the multicast service in the inactive state or the idle state, and is also referred to as inactive state configuration information or idle state configuration information.

In the case that the terminal switches from the first state to the second state and the service data reception is performed (which may be based on the first configuration information or the second configuration information), the terminal determines to receive the first configuration information. Thus, in the case that the terminal re-enters the inactive state and uses the first configuration information, the terminal may quickly perform the service data reception based on the received first configuration information.

Alternatively, in the case that the terminal switches from the first state to the second state and the multicast service reception is not performed, the terminal determines not to receive the first configuration information. Thus, in the case that there are a plurality of sets of configuration information in the terminal, the behavior of the terminal is clarified. This provides high availability.

The inactive state multicast configuration information may be provided via the MCCH message, and an MCCH configuration may be provided via the SIB message.

For other contents of this embodiment reference may be made to the previous description of other embodiments and details will not be repeated herein.

As shown above, in the case that the terminal switches from the inactive state to the connected state, the terminal may include both the inactive state multicast service configuration information and the connected state multicast service configuration information. In this case, the behavior of the terminal should be clarified. For example, which set of configuration information is retained and used by the terminal should be clarified. In addition, for the inactive state multicast service configuration information, in the case that the inactive state multicast service configuration information is provided for the terminal via the MCCH, the terminal switches from the inactive state to the connected state, and the terminal does not use the inactive state multicast service configuration information provided by the MCCH any more, the behavior of the terminal should be clarified. For example, whether the terminal continues to monitor the SIB and the MCCH should be clarified. By the above embodiments, the disclosure clarifies the behavior of the terminal in the above situations, which improves the reliability of multicast service data transmission, and provides high availability.

Corresponding to the method embodiments that implement application functions as described above, the disclosure also provides apparatus embodiments that implement the application functions .

Referring to FIG. 9, it is a block diagram illustrating an apparatus for information determination according to an exemplary embodiment. The apparatus is applied to a terminal, including a first determining module 901.

The first determining module 901 is configured to, upon a terminal state transition, determine target configuration information, in which the target configuration information is used by the terminal to perform service data reception.

Referring to FIG. 10, it is a block diagram illustrating an apparatus for information determination according to an exemplary embodiment. The apparatus is applied to a network device, including a second determining module 1001.

The second determining module 1001 is configured to determine target configuration information upon a terminal state transition, in which the target configuration information is used by the terminal to perform service data reception.

For the apparatus embodiments, since they basically correspond to the method embodiments, relevant description can refer to the method embodiments. The apparatus embodiments as described above are merely schematic, in which the units described above as separated components may or may not be physically separated, and the components displayed as units may or may not be physical units. That is, they may be located at a single place, or may also be distributed to a plurality of network units. Some or all of these modules may be selected to fulfill the purpose of the scheme of the disclosure according to actual needs. It may be understood and implemented by a person of ordinary skill in the art without creative labor.

Accordingly, the present disclose further provides a computer-readable storage medium having stored a computer program that implements any of the described methods for information determination at the terminal.

Accordingly, the present disclose further provides a computer-readable storage medium having stored a computer program that implements any of the described methods for information determination at the network device.

Accordingly, a device for information determination is also provided in the disclosure, which includes: a processor; and a memory storing instructions executable by the processor; in which the processor is configured to perform any of the described methods for information determination at the terminal.

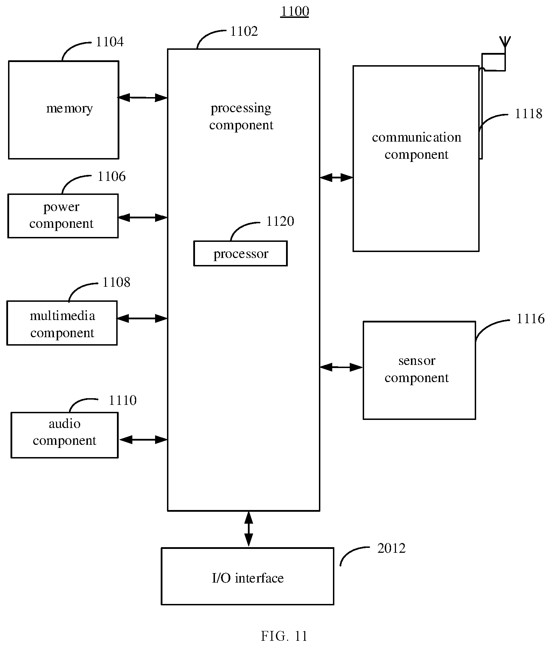

FIG. 11 is a structural block diagram illustrating a device 1100 for information determination according to an exemplary embodiment. For example, the device 1100 may be a terminal, such as a cell phone, a tablet computer, an e-book reader, a multimedia playback device, a wearable device, an in-vehicle user device, an iPad, a smart TV, or the like.

Referring to FIG. 11, the device 1100 may include one or more of the following components: a processing component 1102, a memory 1104, a power component 1106, a multimedia component 1108, an audio component 1110, an input/output (I/O) interface 1112, a sensor component 1116, and a communication component 1118.

The processing component 1102 generally controls overall operations of the device 1100, such as operations associated with display, telephone calls, a data random access, camera operations, and recording operations. The processing component 1102 may include one or more processors 1111 to execute instructions to complete all or part of the steps of the above method for information determination. In addition, the processing component 1102 may include one or more modules to facilitate interactions between the processing component 1102 and other components. For example, the processing component 1102 may include a multimedia module to facilitate interactions between the multimedia component 1108 and the processing component 1102. As another example, the processing component 1102 may read executable instructions from the memory to implement the steps of the methods for information determination provided in the above embodiments.

The memory 1104 is configured to store various types of data to support operations at the device 1100. Examples of such data include instructions for any application or method operating on the device 1100, contact data, phonebook data, messages, pictures, videos, etc. The memory 1104 may be implemented by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic storage, a flash memory, a magnetic disk or an optical disk.

The power component 1106 provides power to various components of the device 1100. The power component 1106 may include a power management system, one or more power supplies, and other components associated with generating, managing, and distributing power for the device 1100.

The multimedia component 1108 includes a screen that provides an output interface between the device 1100 and the user. In some embodiments, the multimedia component 1108 includes a front-facing camera and/or a rear-facing camera. When the device 1100 is in an operation mode, such as a shooting mode or a video mode, the front camera and/or the rear camera may receive external multimedia data. Each of the front-facing camera and the rear-facing camera may be a fixed optical lens system or may have variable focal length and optical zoom capabilities.

The audio component 1110 is configured to output and/or input audio signals. For example, the audio component 1110 includes a microphone (MIC), which is configured to receive external audio signals when the device 1100 is in an operating mode, such as a call mode, a recording mode, and a voice recognition mode. The received audio signal may be further stored in the memory 1104 or transmitted via the communication component 1118. In some embodiments, the audio component 1110 also includes a speaker for outputting audio signals.

The I/O interface 1112 provides an interface between the processing component 1102 and a peripheral interface module, which may be a keyboard, a click wheel, a button, etc. The button may include, but is not limited to: a home button, volume buttons, a start button, and a lock button.

The sensor component 1116 includes one or more sensors for providing status assessment of various aspects for the device 1100. For example, the sensor component 1116 may detect an open/closed state of the device 1100, a relative positioning of components, such as a display and a keypad of the device 1100. The sensor component 1116 may also detect position changes of the device 1100 or a component of the device 1100, a presence or absence of user contacts with the device 1100, an orientation or an acceleration/deceleration of the device 1100 and temperature changes of the device 1100. The sensor component 1116 may include a proximity sensor configured to detect a presence of a nearby object without any physical contact. The sensor component 1116 may also include a light sensor, such as a CMOS or CCD image sensor, for use in imaging applications. In some embodiments, the sensor component 1116 may also include an acceleration sensor, a gyroscope sensor, a magnetic sensor, a pressure sensor, or a temperature sensor.

The communication component 1118 is configured to facilitate wired or wireless communication between the device 1100 and other devices. The device 1100 may access a wireless network based on a communication standard, such as Wi-Fi, 2G, 3G, 4G, 5G, 6G or their combination. In an exemplary embodiment, the communication component 1118 receives a broadcast signal or broadcast-related information from an external broadcast management system via a broadcast channel. In an exemplary embodiment, the communication component 1118 also includes a near field communication (NFC) module to facilitate short-range communications. For example, the NFC module may be implemented based on radio frequency identification (RFID) technology, infrared data association (IrDA) technology, ultra wideband (UWB) technology, Bluetooth (BT) technology, and other technologies.

In an exemplary embodiment, the device 1100 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to perform any of the above methods for information determination at the terminal.

In an exemplary embodiment, a non-transitory computer-readable storage medium including instructions is also provided, such as the memory 1104 including instructions. The above instructions may be executed by the processor 1120 of the device 1100 to perform the above methods for information determination. For example, the non-transitory computer-readable storage medium may be a ROM, a random access memory (RAM), a CD-ROM, a magnetic tape, a floppy disk, an optical data storage device, and the like.

Accordingly, a device for information determination is also provided in the disclosure, and the device for information determination includes: a processor; and a memory storing instructions executable by the processor; in which the processor is configured to perform any of the described methods for information determination at the network device.

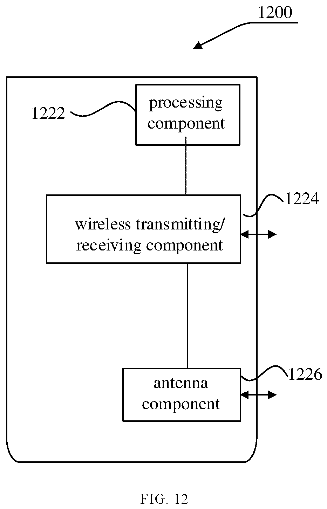

FIG. 12 is a structural block diagram illustrating a device 1200 for information determination according to an exemplary embodiment. The device 1200 may be provided as a network device. Referring to FIG. 12, the device 1200 includes a processing component 1222, a wireless transmitting/receiving component 1224, an antenna component 1226, and a signal processing portion specific to a wireless interface, and the processing component 1222 may further include at least one processor.

One of the processors in the processing component 1222 may be configured for performing any of the methods for communication described above.

Other implementations of the disclosure may be apparent to those skilled in the art from consideration of the specification and practice of the invention disclosed herein. This disclosure intends to cover any modifications, uses or adaptive changes of the disclosure, which follow the general principles of the disclosure and include common knowledge or conventional technical means in the technical field that are not disclosed in the disclosure. The specification and the embodiments are considered as exemplary only, with a true scope and spirit of the disclosure being indicated by the following claims.

It should be understood that the disclosure are not limited to the exact structures that have been described above and shown in the drawings, and that various modifications and changes may be made without departing from the scope of the disclosure. The scope of the disclosure is limited only by the appended claims.

## Claims

1. A method for information determination, performed by a terminal, comprising:
upon a terminal state transition, determining target configuration information, wherein the target configuration information is used by the terminal to perform service data reception.

2. The method according to claim 1, wherein determining the target configuration information comprises:
in response to receiving second configuration information sent by a network device, determining the target configuration information based on at least the second configuration information, wherein the second configuration information is used by the terminal to perform service data reception in a second state, and the second state corresponds to a terminal state after state transition.

3. The method according to claim 1 or 2, wherein determining the target configuration information comprises:
in response to not receiving the second configuration information, determining first configuration information as the target configuration information, wherein the first configuration information is used by the terminal to perform service data reception in a first state, and the first state corresponds to a terminal state before state transition.

4. The method according to claim 2, wherein determining the target configuration information based on at least the second configuration information comprises one of:
determining the second configuration information as the target configuration information; or
determining the target configuration information based on first configuration information and the second configuration information.

5. The method according to claim 1, further comprising:
releasing first configuration information.

6. The method according to claim 5, further comprising:
in response to not receiving second configuration information, determining not to perform the service data reception.

7. The method according to any one of claims 1-6, further comprising:
determining whether to receive first configuration information.

8. The method according to claim 7, wherein determining whether to receive the first configuration information comprises:
in response to the first configuration information being used for performing the service data reception, determining to receive the first configuration information, and/or
in response to the first configuration information being not used for performing the service data reception, determining not to receive the first configuration information.

9. The method according to claim 7, wherein determining whether to receive the first configuration information comprises:
in response to performing the service data reception, determining to receive the first configuration information, and/or
in response to not performing the service data reception, determining not to receive the first configuration information.

10. The method according to any one of claims 2-9, wherein first configuration information and second configuration information correspond to the same service.

11. The method according to claim 10, wherein the service comprises a multicast service.

12. The method according to any one of claims 7-11, wherein receiving the first configuration information comprises:
receiving a broadcast signaling carrying the first configuration information sent by the network device, wherein the first configuration information comprises inactive state service configuration information.

13. The method according to claim 12, further comprising:
receiving a first message carrying broadcast signaling reception configuration information sent by the network device;
wherein receiving the broadcast signaling carrying the first configuration information comprises:
receiving, based on the broadcast signaling reception configuration information, the broadcast signaling carrying the first configuration information sent by the network device.

14. The method according to any one of claims 7-11, wherein not receiving the first configuration information comprises at least one of:
not monitoring a first message carrying broadcast signaling reception configuration information; or
not monitoring a broadcast signaling carrying the first configuration information.

15. The method according to any one of claims 7-11, wherein not receiving the first configuration information comprises at least one of:
not monitoring a paging message for notifying a broadcast signaling configuration update; or
not monitoring a broadcast signaling carrying the first configuration information.

16. The method according to claim 13 or 14, wherein the first message is a system information block (SIB) message or a dedicated signaling.

17. The method according to any one of claims 12-16, wherein the broadcast signaling is a multicast broadcast service (MBS) control channel (MCCH) message.

18. The method according to any one of claims 7-11, further comprising:
receiving the first configuration information sent by the network device via a dedicated signaling, wherein the first configuration information comprises inactive state service configuration information.

19. The method according to claim 16 or 18, wherein the dedicated signaling comprises at least one of:
a radio resource control (RRC) release message;
an RRC reconfiguration message; or
an RRC resume message.

20. The method according to claim 19, wherein the RRC release message carries suspend configuration information.

21. A method for information determination, performed by a network device, comprising:
determining target configuration information upon a terminal state transition, wherein the target configuration information is used by the terminal to perform service data reception.

22. The method according to claim 21, further comprising:
sending second configuration information to the terminal, wherein the second configuration information is used by the terminal to perform service data reception in a second state, and the second state corresponds to a terminal state after state transition.

23. The method according to claim 21 or 22, wherein determining the target configuration information upon the terminal state transition comprises:
in response to sending the second configuration information to the terminal, determining that the target configuration information is determined by the terminal based on at least the second configuration information.

24. The method according to any one of claims 21-23, wherein determining the target configuration information upon the terminal state transition comprises:
in response to not sending the second configuration information to the terminal, determining that first configuration information is determined by the terminal as the target configuration information, wherein the first configuration information is used by the terminal to perform service data reception in a first state, and the first state corresponds to a terminal state before state transition.

25. The method according to claim 23, wherein determining that the target configuration information is determined by the terminal based on at least the second configuration information comprises one of:
determining that the second configuration information is determined by the terminal as the target configuration information; or
determining that the target configuration information is determined by the terminal based on first configuration information and the second configuration information.

26. The method according to claim 21, further comprising:
determining that first configuration information is released by the terminal.

27. The method according to claim 26, further comprising:
in response to not sending second configuration information to the terminal, determining that the service data reception is not performed by the terminal.

28. The method according to any one of claims 21-27, further comprising:
determining whether the terminal is to receive first configuration information.

29. The method according to claim 28, wherein determining whether the terminal is to receive the first configuration information comprises:
in response to the terminal using the first configuration information for performing the service data reception, determining that the terminal is to receive the first configuration information; and/or
in response to the terminal not using the first configuration information for performing the service data reception, determining that the terminal is not to receive the first configuration information.

30. The method according to claim 28, wherein determining whether the terminal is to receive the first configuration information comprises:
in response to the terminal performing the service data reception, determining that the terminal is to receive the first configuration information; and/or
in response to the terminal not performing the service data reception, determining that the terminal is not to receive the first configuration information.

31. The method according to any one of claims 22-30, wherein first configuration information and second configuration information correspond to the same service.

32. The method according to claim 31, wherein the service comprises a multicast service.

33. The method according to any one of claims 28-32, further comprising:
sending a broadcast signaling carrying the first configuration information to the terminal, wherein the first configuration information comprises inactive state service configuration information.

34. The method according to claim 33, further comprising:
sending a first message carrying broadcast signaling reception configuration information to the terminal.

35. The method according to any one of claims 28-32, wherein the terminal not receiving the first configuration information comprises at least one of:
the terminal not monitoring a first message carrying broadcast signaling reception configuration information; or
the terminal not monitoring a broadcast signaling carrying the first configuration information.

36. The method according to any one of claims 28-32, wherein the terminal not receiving the first configuration information comprises at least one of:
the terminal not monitoring a paging message for notifying a broadcast signaling configuration update; or
the terminal not monitoring a broadcast signaling carrying the first configuration information.

37. The method according to claim 34 or 35, wherein the first message is a system information block (SIB) message or a dedicated signaling.

38. The method according to any one of claims 33-37, wherein the broadcast signaling is a multicast broadcast service (MBS) control channel (MCCH) message.

39. The method according to any one of claims 28-32, further comprising:
sending a dedicated signaling carrying the first configuration information to the terminal, wherein the first configuration information comprises inactive state service configuration information.

40. The method according to claim 37 or 39, wherein the dedicated signaling comprises at least one of:
a radio resource control (RRC) release message;
an RRC reconfiguration message; or
an RRC resume message.

41. The method according to claim 40, wherein the RRC release message carries suspend configuration information.

42. An apparatus for information determination, applied to a terminal, comprising:
a first determining module, configured to, upon a terminal state transition, determining target configuration information, wherein the target configuration information is used by the terminal to perform service data reception.

43. An apparatus for information determination, applied to a network device, comprising:
a second determining module, configured to determine target configuration information upon a terminal state transition, wherein the target configuration information is used by the terminal to perform service data reception.

44. A computer-readable storage medium having stored a computer program that, when executed by a processor, implements the method according to any one of claims 1-20.

45. A computer-readable storage medium having stored a computer program that, when executed by a processor, implements the method according to any one of claims 21-41.

46. A device for information determination, comprising:
a processor;
a memory storing instructions executable by the processor;
wherein the processor is configured to implement the method according to any one of claims 1-20.

47. A device for information determination, comprising:
a processor;
a memory storing instructions executable by the processor;
wherein the processor is configured to implement the method according to any one of claims 21-41.
